# EUROPÄISCHE PATENTSCHRIFT

(11) **EP 3 450 332 B1**
(45) Veröffentlichungstag und Bekanntmachung des Hinweises auf die Patenterteilung: **10.06.2020**
(21) Anmeldenummer: 18188877.7
(22) Anmeldetag: 14.08.2018
(51) Int. Cl.: B65B 43/42, B65B 21/18

(54) **VERPACKUNGSVORRICHTUNG FÜR ARTIKEL UND VERFAHREN ZUM EINBRINGEN VON ARTIKELN IN VORBEREITETE UMVERPACKUNGEN**
PACKAGING DEVICE FOR ARTICLES AND METHOD FOR LOADING ARTICLES INTO PREPARED ENVELOPING PACKAGING
DISPOSITIF D'EMBALLAGE POUR ARTICLES ET PROCÉDÉ D'INSERTION DES ARTICLES DANS UN EMBALLAGE EXTÉRIEUR PRÉPARÉ

(30) Priorität: 01.09.2017 DE 102017120133
(43) Veröffentlichungstag der Anmeldung: 06.03.2019
(73) Patentinhaber: Krones Aktiengesellschaft, 93073 Neutraubling (DE)
(72) Erfinder: FECHTER, Wolfgang, 93073 Neutraubling (DE); CANALICCHIO, Christian, 93073 Neutraubling (DE)
(74) Vertreter: Benninger, Johannes

(56) Entgegenhaltungen:
- EP-A2- 3 012 197
- GB-A- 1 428 064
- US-A1- 2016 347 488
- US-B1- 7 703 260

## Beschreibung

Die vorliegende Erfindung betrifft eine Verpackungsvorrichtung für Artikel mit den Merkmalen des unabhängigen Anspruchs 1 sowie ein Verfahren zum Einbringen von Artikeln in zu Kartonagen aufgefaltete Verpackungsmittel und/oder in entsprechend vorbereitete Umverpackungen mit den Merkmalen des unabhängigen Verfahrensanspruchs.

Der Umgang mit Artikeln sieht häufig vor, einzelne oder mehrere Artikel mit einer Umverpackung zu versehen, d.h. in der Regel, die Artikel in die Umverpackung hineinzutun. Dies erfolgt im Falle einzelner Artikel zu deren verbessertem Schutz und/oder zu deren verbesserter Verkaufspräsentation. Im Falle einer Umverpackung für mehrere Artikel wird durch die Umverpackung zusätzlich ein Gebinde aus mehreren Artikeln bereitgestellt. Solche Gebinde stellen eine effektive Art dar, den gleichzeitigen Umgang mit mehreren gleichartigen Artikeln zu ermöglichen, bspw. um den Transport mehrerer gleichartiger Artikel zugleich zu erleichtern. Gebinde aus mehreren zusammengehaltenen Artikeln stellen daher für viele Artikel, wie bspw. Getränkebehälter, die häufigste Variante von Verkaufseinheiten dar.

Bei den Artikeln handelt es sich um Objekte wie etwa verpackte oder unverpackte Gegenstände, Behälter, wie etwa Getränkeflaschen oder Dosen. Es kann sich bei den Artikeln selbst wiederum um Gebinde aus mehreren Objekten handeln, wobei die Objekte eines Gebindes bspw. mittels einer eine Gruppe von Objekten an deren Peripherie umgebenden Umfassung, wie bspw. einer Umreifung, einer Umverpackung, wie etwa einer Umwickelung, einem Schrumpfschlauch oder einer Kartonage oder eines Tragegestells, wie etwa eines Getränkekastens, zusammengehalten werden können, um nur einige denkbare Ausgestaltungen zu nennen.

Als jeweils einen oder mehrere Artikel beherbergende Umverpackungen kommen unter anderem Faltschachteln zum Einsatz, da diese einen hohen, gegebenenfalls zusätzlichen Schutz für die in ihnen beherbergten Artikel bieten, darüber hinaus mit den in ihnen beherbergten Artikeln stapelfähig sind, und außerdem das Identifizieren der von ihnen beherbergten Artikel durch auf ihrer Außenseite aufgedruckte oder aufgeklebte Informationen ermöglichen oder erleichtern. Ferner können sie durch entsprechende Informationen auf ihrer Außenseite als Werbeträger dienen.

Bei Faltschachteln handelt es sich um industriell vorgefertigte, auf ein besonders kleines Raum- oder Packmaß zusammengefaltete oder zusammengelegte, meist quaderförmige Behälter, die platzsparend in zusammengelegtem Zustand bis zu deren Verwendung transportiert und gelagert werden, um bei deren Bedarf mit einfachen Handgriffen oder maschinell zur Umverpackung aufgefaltet zu werden, wie dies bspw. von für Postpakete verwendeten Faltschachteln bekannt ist. Zusammengefaltet benötigen sie wenig Platz bei deren Transport und Lagerung.

Als durch bspw. Faltschachteln ausgeführte Behälter gebildete Umverpackungen können mit oder ohne darin angeordnete oder anordenbare, einzelne Artikel voneinander trennende und/oder voneinander fern haltende, auch als sog. Baskets bezeichnete Gefache ausgeführt sein.

Als Gefache wird eine in einer Umverpackung anzuordnende oder angeordnete, sog. Inneneinrichtung, die bspw. aus ineinandergesteckten und/oder miteinander bspw. durch Knickkanten und/oder Klebeverbindungen verbundenen Stegen bestehen kann, bezeichnet.

Die Stege können bspw. aus Karton und/oder Pappe oder Kunststoffen bestehen. Zum Schutz empfindlicher Artikel kann bspw. Wellpappe für die Stege verwendet werden. Durch Knickkanten und/oder Klebeverbindungen und/oder Schlitze in den Stegen sind und/oder werden die Stege so miteinander verbunden, dass für je einen oder mehrere Artikel vorgesehene Fächer mit bspw. rechteckiger oder dreieckiger oder mehreckiger Grundfläche entstehen, in denen Artikel gegen Verrutschen fixiert sind.

Zusammengefasst weisen Gefache den Artikeln innerhalb der Umverpackungen feste Plätze zu und schützen diese dadurch beim Weitertransport und/oder bei der Lagerung von diese beherbergenden Umverpackungen bspw. vor einem Gegeneinanderstoßen und Aneinanderreiben bis zur Entnahme der Artikel und deren Verbrauch, was ansonsten bspw. durch Abwetzungsspuren, etwa von auf den Artikeln bspw. in Form von Etiketten aufgebrachten Informationen, und/oder Beschädigungen der Artikel untereinander einen negativen Qualitätseindruck zur Folge haben kann.

So offenbart die US 7 703 260 B1 eine Verpackungseinrichtung, wobei bereits aufgefaltete Verpackungsmittel über eine erste Transporteinrichtung einem als Karussell ausgebildeten Manipulator zugeführt und von einem schienengeführten Träger aufgenommen werden. Über eine zweite Transporteinrichtung werden die zu verpackenden Artikel ebenfalls dem Manipulator zugeführt. Durch eine Schienenführung werden die auf den Trägern platzierten Verpackungsmittel den Artikeln zugeführt, die Artikel in das Verpackungsmittel eingebracht und über eine dritte Transporteinrichtung abtransportiert.

US-A-2016/0347488 beschreibt eine Verpackungseinrichtung mit einer als Karussell ausgebildeten Aufrichteinrichtung und einem als Karussell ausgebildeten Manipulator. Die Aufrichteinrichtung und der Manipulator haben jeweils eine gerade Strecke, die parallel nebeneinander angeordnet sind und eine Transferregion bilden. Die in der Aufrichteinrichtung aufgefaltete Verpackungsmittel werden durch zusammenarbeitenden Komponenten der Aufrichteinrichtung und des Manipulators an den Manipulator in der Transferregion zugeführt.

Analog zur Bereitstellung von Faltschachteln als Umverpackungen werden in Umverpackungen einzusetzende Gefache bevorzugt vorgefertigt und auf ein besonders kleines Raum- oder Packmaß zusammengefaltet oder zusammengelegt, so dass sie platzsparend in zusammengelegtem Zustand bis zu deren Verwendung transportiert und gelagert werden können, um bei deren Bedarf mit einfachen Handgriffen oder maschinell aufgefaltet zu werden.

Gefache und/oder Umverpackungen werden bevorzugt aus ein- oder mehrteiligen Kartonagen aus stabilisierten Papiersorten, wie bspw. Karton und/oder Pappe hergestellt. Für jede Art von Gefachen und/oder Umverpackungen gibt es Kartonagen in verschiedenen Stärken und Größen. Für empfindliche Artikel kann bspw. Wellpappe zu deren Schutz verwendet werden.

Zu Gefachen und/oder Umverpackungen auffalt- oder aufziehbare, zusammengefaltete oder zusammengelegte Kartonagen, welche nachfolgend verallgemeinert oder verallgemeinernd auch als Verpackungsmittel bezeichnet werden, weisen durch Knickkanten und/oder Klebeverbindungen und/oder Steckverbindungen untereinander verbundene Kartonagewände auf, die bspw. aus bogenförmigem Material ausgeschnitten und/oder ausgestanzt sein können. In zusammengelegtem Zustand bilden jeweils mindestens zwei miteinander verbundene Kartonagewände eine obere und eine untere Flachseite einer flach zusammengelegten Kartonage.

Durch Ausübung eines Drucks auf die Seiten einer zusammengelegten Kartonage und/oder durch Zusammenschieben der Seiten der Kartonage bzw. eines zusammengelegten solchen Verpackungsmittels kann die Kartonage oder das Verpackungsmittel zu einem Gefache und/oder zu einer Umverpackung aufgefaltet werden. Ebenso möglich ist es, die zusammengelegte Kartonage an den jeweiligen Oberflächen der oberen und unteren Flachseite einer Kartonagewand bspw. mittels Saugern zu halten und durch Vergrößerung des zunächst auf das Dickenmaß der zusammengelegten Kartonage beschränkten Abstands zwischen den Oberflächen der Kartonagewände aufzuziehen. Durch Verbindung der Kartonagewände untereinander werden hierbei auch Kartonagewände der Kartonage mit aufgefaltet oder aufgezogen, welche innerhalb des von den Kartonagewänden der oberen und der unteren Flachseite aufgespannten Raums angeordnet sind.

Für das Auffalten sind auch Kombinationen aus seitlicher Druckausübung und Aufziehen möglich.

Durch das solchermaßen ablaufende Auffalten oder Aufziehen entsteht im Falle einer als Faltschachtel ausgeführten Umverpackung ein Innenraum und im Falle eines zusammen- und auffaltbaren Gefaches oder einer als Faltschachtel mit bereits in dieser angeordnetem Gefache ausgeführten Umverpackung je Fach des Gefaches ein Innenraum, der durch eine beziehungsweise jeweils eine eine normal zu den Kartonagewänden verlaufende Ebene aufspannende Zugangsöffnung zugänglich ist, durch welche Zugangsöffnung Artikel in den entsprechenden Innenraum eingebracht werden können.

Zeitlich nachdem das jeweilige Gefache bzw. die das jeweilige Gefache enthaltende Umverpackung aufgezogen wurde, wird die Umverpackung zusammen mit dem Gefache auf einer Transporteinrichtung platziert, worauf folgend Artikel bzw. Getränkebehälter in die durch das jeweilige Gefache gebildeten Kammern bzw. Innenräume eingebracht werden können. Um zu verhindern, dass sich die Umverpackung und das jeweilige Gefache ungewollt rückfalten und um sicherstellen zu können, dass jeweilige Artikel zielgenau in die durch das jeweilige Gefache gebildeten Innenräume bzw. Kammern eingebracht werden können, besitzen bereits erwähnte und für die Platzierung einer jeweiligen Umverpackung vorgesehene Transporteinrichtungen seitlich benachbarte bzw. seitlich voneinander beabstandete Führungsgeländer, deren Abstände eine Umverpackung hindurchlassen. Zwischen unmittelbar benachbarten Führungsgeländern kann eine jeweilige Umverpackung zusammen mit dem aufgenommenen Gefache angeordnet werden, wobei die jeweiligen seitlichen Führungsgeländer mit der Umverpackung in Anlage stehen, hierdurch die jeweilige Umverpackung mit dem jeweiligen Gefache in ihrer jeweiligen Position halten und somit ein ungewolltes Rückfalten der Umverpackung bzw. des jeweiligen Gefaches verhindern. Durch die Position der seitlich benachbarten Führungsgeländer ist auch die Position der jeweiligen Umverpackung bzw. des jeweiligen Gefaches zumindest weitgehend vorbestimmt, so dass Artikel gezielt in die durch ein jeweiliges Gefache gebildeten Innenräume bzw. Kammern eingebracht werden können.

Transporteinrichtungen, welche aufgrund der beschriebenen Notwendigkeit bis dato zwingend über seitliche benachbarte Führungsgeländer verfügen müssen, besitzen einen komplizierten Aufbau und sind teuer in der Herstellung und Anschaffung. Sofern eine Verpackungsvorrichtung mit solchen Transporteinrichtungen aufgestellt werden soll, ist zudem ein hoher Zeitaufwand erforderlich, da die seitlichen Führungsgeländer jeweils installiert und in eine genaue Position gebracht werden müssen. Zudem besitzen solche Verpackungsvorrichtungen einen hohen Platzbedarf.

Eine Aufgabe der Erfindung kann somit darin gesehen werden, eine entsprechende Möglichkeit zur Verpackung von Artikeln bereit zu stellen, die günstig in der Herstellung und/oder Anschaffung ist und sich durch einen einfachen und übersichtlichen Aufbau bzw. eine einfache Umsetzung auszeichnet.

Die obige Aufgabe wird durch die Verpackungsvorrichtung und das Verfahren mit den Merkmalen der unabhängigen Ansprüche gelöst. Weitere vorteilhafte Ausgestaltungen werden durch die abhängigen Ansprüche beschrieben.

Die Erfindung betrifft eine Verpackungsvorrichtung für Artikel, wie Getränkebehälter oder dergleichen. Die Verpackungsvorrichtung umfasst wenigstens eine Transporteinrichtung, mit welcher ggf. bereits zu einer Kartonage und/oder Umverpackung aufgefaltete Verpackungsmittel sowie die hierin eingebrachten Artikel bzw. Getränkebehälter in Richtung einer Palettierstation bewegt werden können. Somit kann die wenigstens eine Transporteinrichtung zum Abtransport von bereits zu einer Kartonage und/oder Umverpackung aufgefalteten Verpackungsmitteln und der jeweils hierin angeordneten bzw. in diese eingebrachten Artikel ausgebildet sein.

Die Transporteinrichtung kann bspw. durch eine Horizontalfördereinrichtung ausgebildet sein. Somit kann die Transporteinrichtung mindestens ein umlaufend geführtes Transportband umfassen, auf welches, wie nachfolgend noch beschrieben, bereits zu einer Kartonage und/oder Umverpackung aufgefaltete Verpackungsmittel aufgesetzt werden. Wenn an dieser Stelle die Rede von wenigstens einer Transporteinrichtung ist, was auch das denkbare Vorhandensein von mehreren Transporteinrichtungen impliziert, so können damit etwa in Transportrichtung aufeinanderfolgende und sich aneinander anschließende Transporteinrichtungen gemeint sein, oder es können etwa parallel verlaufende und vorzugsweise mit gleichen Umlaufgeschwindigkeiten angetriebene Transport- oder Förderbänder oder dergleichen mehr gemeint sein.

Weiter umfasst die Verpackungsvorrichtung mindestens eine Verbringungseinrichtung, welche ein bereits zu einer Kartonage und/oder Umverpackung aufgefaltetes Verpackungsmittel entgegennehmen und an die wenigstens eine Transporteinrichtung überführen kann. Die mindestens eine Verbringungseinrichtung bzw. ein als Bestandteil der mindestens einen Verbringungseinrichtung ausgebildetes Verbringungswerkzeug kann somit bereits zu einer Kartonage und/oder Umverpackung aufgefaltete Verpackungsmittel entgegennehmen und hierauf folgend in Richtung der Transporteinrichtung bewegen, woraufhin das jeweilige bereits zu einer Kartonage und/oder Umverpackung aufgefaltete Verpackungsmittel auf die Transporteinrichtung aufgesetzt wird. Die mindestens eine Verbringungseinrichtung kann zum Zentrieren der bereits zu einer Kartonage und/oder Umverpackung aufgefalteten Verpackungsmittel ausgebildet sein.

Bestandteil der erfindungsgemäßen Verpackungsvorrichtung ist zudem wenigstens ein zum Einsetzen von Artikeln in ein bereits zu einer Kartonage und/oder Umverpackung aufgefaltetes Verpackungsmittel ausgebildeter Manipulator. Der Manipulator kann bspw. durch eine Handhabungseinrichtung oder ein Portalsystem ausgebildet sein. Bewährt haben sich Ausführungsformen, bei welchen der Manipulator eine Vielzahl an Greifköpfen besitzt, wobei ein jeweiliger Greifkopf einen jeweiligen Artikel bzw. einen jeweiligen Getränkebehälter zum Einsetzen in ein jeweiliges bereits zu einer Kartonage und/oder Umverpackung aufgefaltetes Verpackungsmittel temporär entgegennehmen kann. D.h. der Manipulator kann bspw. einen sog. Packkopf aufweisen, der mit Packtulpen oder sonstigen Greifelementen zur Aufnahme von Artikeln wie Getränkebehältern oder Flaschen mittels Unterdruck und/oder durch mechanische Verriegelungselemente ausgestattet ist.

Es kann ein Zulauf vorgesehen sein, welcher mehrere Reihen an Artikeln und/oder einen Reihentransport von Artikeln bereitstellt, welche für ein Einsetzen in bereits zu einer Kartonage und/oder Umverpackung aufgefaltete Verpackungsmittel vorgesehen sind. Auch der Zulauf kann als Horizontalfördereinrichtung ausgebildet sein und ggf. ein umlaufend geführtes Transportband umfassen, auf welchem die mehreren Reihen an Artikeln bereitgestellt werden. Auch ist es denkbar, dass die mehreren Reihen an auf dem Zulauf angeordneten Artikeln durch Staudruck bewegt werden. Im Bereich des Zulaufs können mehrere Führungsgeländer vorgesehen sein, welche parallel zueinander verlaufen. Zwischen einem unmittelbar benachbarten Paar zweier Führungsgeländer bzw. zwischen zwei unmittelbar benachbarten Führungsgeländern kann jeweils eine Reihe an Artikeln bewegt werden. Wenn an dieser Stelle von Führungsgeländern die Rede ist, so können diese auch durch sog. Gassenbleche gebildet sein, die oftmals zur seitlichen Abtrennung mehrreihiger Transportabschnitte mit jeweils einer Vielzahl an hintereinander beförderten Artikeln vorgesehen sind.

Es ist vorgesehen, dass mittels der mindestens einen Verbringungseinrichtung bereits zu einer Kartonage und/oder Umverpackung aufgefaltete Verpackungsmittel ausgerichtet werden können und hierdurch die Verpackungsmittel in eine Orientierung überführbar sind, welche Orientierung auf das jeweilige Einsetzen von Artikeln über den wenigstens einen Manipulator abgestimmt ist. Die mindestens eine Verbringungseinrichtung und der Manipulator können somit in sinnvoller Weise und in abgestimmten Bewegungs- und Manipulationsabläufen zusammenwirken, wobei die mindestens eine Verbringungseinrichtung bereits zu einer Kartonage und/oder Umverpackung aufgefaltete Verpackungsmittel in eine Orientierung überführt, welche auf das jeweilige Einsetzen von Artikeln über den wenigstens einen Manipulator abgestimmt ist, wobei der wenigstens eine Manipulator die Artikel sodann in die jeweilige in die Orientierung überführte Kartonage und/oder in die jeweilige in die Orientierung überführte Umverpackung einsetzt.

Sofern die Umverpackung bzw. Kartonage über Gefache verfügt, können Artikel bzw. Getränkebehälter durch die vorbekannte Orientierung der jeweiligen Umverpackung bzw. der jeweiligen Kartonage zielgenau in jeweilige durch Gefache gebildete Kammern eingebracht werden. Es sind zudem Ausführungsformen vorstellbar, bei welchen bereits zu einer Umverpackung und/oder Kartonage aufgefaltete Verpackungsmittel ein solches Gefache nicht aufweisen. Auch für solche Ausführungsformen werden bereits zu einer Umverpackung und/oder Kartonage aufgefaltete Verpackungsmittel ausgerichtet und hierdurch in eine Orientierung überführt, welche Orientierung auf das jeweilige Einsetzen von Artikeln über den wenigstens einen Manipulator abgestimmt ist.

Da das Ausrichten bzw. das Überführen in die Orientierung mittels der mindestens einen Verbringungseinrichtung bewirkt wird, kann die vorhergehend bereits erwähnte Transporteinrichtung, welche ggf. bereits zu einer Kartonage und/oder Umverpackung aufgefaltete Verpackungsmittel zusammen mit jeweiligen eingesetzten Artikeln abtransportiert, geländerlos bzw. ohne entsprechende Führungsgeländer ausgeführt sein. Das Aufstellen der Verpackungsvorrichtung kann hierdurch zeitoptimiert erfolgen. Da sich entlang der Transporteinrichtung erstreckende Führungsgeländer nicht mehr notwendig und damit auch nicht der Verbringungseinrichtung bei deren Bewegungsabläufen im Wege sind, besitzt die Verpackungsvorrichtung einen übersichtlichen und einfachen Aufbau.

Es ist insbesondere vorstellbar, dass das jeweilige bereits zu einer Kartonage und/oder Umverpackung aufgefaltete Verpackungsmittel während des Einsetzens von jeweiligen Artikeln bzw. Getränkebehältern durchgehend gestützt bzw. gehalten wird. Bspw. kann es sein, dass wenigstens ein nachfolgend noch beschriebener Stützarm das jeweilige zu einer Kartonage und/oder Umverpackung aufgefaltete Verpackungsmittel während des Einsetzens von jeweiligen Artikeln bzw. Getränkebehältern durchgehend stützt bzw. hält. Hierdurch kann sichergestellt werden, dass sich die jeweilige Umverpackung bzw. Kartonage während des Einsetzens von Artikeln bzw. Getränkebehältern nicht ungewollt rückfaltet. Nachdem die jeweiligen Artikel bzw. Getränkebehälter in die jeweilige Kartonage bzw. Umverpackung eingesetzt wurden, kann ein Oberflächenkontakt zwischen der jeweiligen Umverpackung bzw. der jeweiligen Kartonage und dem jeweiligen wenigstens einen Stützarm aufgehoben werden. Die in die Umverpackung bzw. Kartonage eingesetzten Artikel bzw. Getränkebehälter verleihen sodann der jeweiligen Umverpackung bzw. Kartonage Stabilität und verhindern hierdurch zeitlich nach Einsetzen ein ungewolltes Rückfalten. Geländer zur Stabilisierung der Umverpackung bzw. Kartonage sind aus diesem Grunde im Bereich der Transporteinrichtung weiterhin nicht notwendig.

Bewährt haben sich Ausführungsformen, bei welchen die Verpackungsvorrichtung eine Aufrichteinrichtung umfasst. Die Aufrichteinrichtung kann zum Ausbilden von Kartonagen und/oder Umverpackungen durch Auffalten von Verpackungsmitteln sowie zum Übergeben von bereits zu einer Kartonage und/oder Umverpackung aufgefalteten Verpackungsmitteln an die mindestens eine Verbringungseinrichtung ausgebildet sein. Es kann hierbei vorgesehen sein, dass die mindestens eine Verbringungseinrichtung und/oder ein als Bestandteil der mindestens einen Verbringungseinrichtung ausgebildetes Verbringungswerkzeug zwischen der Transporteinrichtung und der Aufrichteinrichtung hin und her bewegt werden kann. Insbesondere kann es sein, dass die mindestens eine Verbringungseinrichtung ein als L-förmiges Formelement ausgebildetes Verbringungswerkzeug besitzt, welches bereits zu einer Kartonage und/oder Umverpackung aufgefaltete Verpackungsmittel von der Aufrichteinrichtung entgegennehmen und zur Transporteinrichtung bewegen kann. Somit kann es sein, dass das als L-förmiges Formelement ausgebildete Verbringungswerkzeug zwischen der Transporteinrichtung und der Aufrichteinrichtung hin und her bewegbar ist.

Weiter kann es sein, dass ein als Bestandteil der mindestens einen Verbringungseinrichtung ausgebildetes Verbringungswerkzeug bzw. gegebenenfalls das als L-förmiges Formelement ausgebildete Verbringungswerkzeug eine ungefähr oder annähernd lotrecht oder wahlweise eine exakt lotrecht verlaufende Orientierungsfläche bereitstellt, unter Anlage an welcher ungefähr oder annähernd oder exakt lotrecht verlaufenden Orientierungsfläche bereits zu einer Kartonage und/oder Umverpackung aufgefaltete Verpackungsmittel ausgerichtet werden können. In denkbaren Ausführungsformen können die Aufrichteinrichtung und das Verbringungswerkzeug bzw. gegebenenfalls das als L-förmiges Formelement ausgebildete Verbringungswerkzeug zusammenwirken, so dass zu einer Kartonage und/oder Umverpackung aufgefaltete Verpackungsmittel bei einer Entgegennahme über das Verbringungswerkzeug bzw. das gegebenenfalls als L-förmige Formelement ausgebildete Verbringungswerkzeug mit der Orientierungsfläche in Kontakt gelangen und hierdurch bereits bei Entgegennahme ausgerichtet werden.

Die Aufrichteinrichtung kann bspw. ein pneumatisches Sauginstrument umfassen, welche ein jeweiliges Verpackungsmittel entgegennimmt, insbesondere durch Ansaugen einer ausreichend glatten und ebenen Außenfläche des Verpackungsmittel, hierauf das Verpackungsmittel zu einer jeweiligen Umverpackung und/oder Kartonage auffaltet und sodann als bereits zu einer Umverpackung und/oder Kartonage aufgefaltetes Verpackungsmittel an die mindestens eine Verbringungseinrichtung bzw. an das ggf. als L-förmiges Formelement ausgebildete Verbringungswerkzeug übergibt. Denkbar ist hierbei, dass das Sauginstrument der Aufrichteinrichtung das zu einer Umverpackung und/oder Kartonage aufgefaltete Verpackungsmittel bei Übergabe bzw. Entgegennahme durch die mindestens eine Verbringungseinrichtung bzw. das ggf. als L-förmiges Formelement ausgebildete Verbringungswerkzeug mit der Orientierungsfläche bündig in Anlage bringt. Unmittelbar nachdem das bereits zu einer Umverpackung und/oder Kartonage aufgefaltete Verpackungsmittel auf das ggf. als L-förmiges Formelement ausgebildete Verbringungswerkzeug aufgesetzt wurde, kann es somit sein, dass das jeweilige bereits zu einer Umverpackung und/oder Kartonage aufgefaltete Verpackungsmittel bereits mit der Orientierungsfläche bündig in Anlage steht.

Es sind zudem Ausführungsformen vorstellbar, bei welchen die Aufrichteinrichtung ein jeweiliges Verpackungsmittel mechanisch und klemmend entgegennimmt, hierauf zu einer Umverpackung und/oder Kartonage auffaltet und sodann als bereits zu einer Umverpackung und/oder Kartonage aufgefaltetes Verpackungsmittel an die mindestens eine Verbringungseinrichtung bzw. an das ggf. als L-förmiges Formelement ausgebildete Verbringungswerkzeug übergibt.

Auch sind Ausführungsformen vorstellbar, bei welchen bereits zu einer Kartonage und/oder Umverpackung aufgefaltete Verpackungsmittel unter Zuhilfenahme wenigstens eines ggf. als Bestandteil der Verpackungsvorrichtung ausgebildeten Stützarmes gegen die Orientierungsfläche geführt und hierdurch ausgerichtet werden bzw. hierdurch in eine Orientierung überführbar sind, welche Orientierung auf das jeweilige Einsetzen von Artikeln über den wenigstens einen Manipulator abgestimmt ist. Hierbei kann die Aufrichteinrichtung ein bereits zu einer Kartonage und/oder Umverpackung aufgefaltetes Verpackungsmittel auf das Verbringungswerkzeug aufsetzen, worauf folgend das Verbringungswerkzeug zusammen mit dem aufgesetzten und bereits zu einer Kartonage und/oder Umverpackung aufgefalteten Verpackungsmittel in Richtung der Transporteinrichtung bewegt wird. Hierbei kann das weiterhin vom Verbringungswerkzeug getragene und bereits zu einer Umverpackung und/oder Kartonage aufgefaltete Verpackungsmittel mit dem wenigstens einen Stützarm in Anlage gelangen, wobei der wenigstens eine Stützarm das bereits zu einer Umverpackung und/oder Kartonage aufgefaltete und weiterhin vom Verbringungswerkzeug getragene Verpackungsmittel gegen die Orientierungsfläche schiebt und bündig mit der Orientierungsfläche in Anlage bringt.

Demnach kann die Verpackungsvorrichtung wenigstens einen Stützarm umfassen, welcher mit dem als Bestandteil der mindestens einen Verbringungseinrichtung ausgebildeten Verbringungswerkzeug derart zusammenwirkt, dass eine durch das Verbringungswerkzeug aufgenommene Umverpackung durch eine Relativbewegung des Verbringungswerkzeuges gegenüber dem wenigstens einen Stützarm gegen die Orientierungsfläche auf bündige Anlage geschoben werden kann. Es kann sein, dass das als Bestandteil der mindestens einen Verbringungseinrichtung ausgebildete Verbringungswerkzeug ein L-förmiges Formelement ist oder ein L-förmiges Formelement umfasst, welches L-förmige Formelement die ungefähr oder annähernd lotrecht verlaufende Orientierungsfläche bereitstellt, wobei an dieser Stelle noch zu erwähnen ist, dass der hier und an anderer Stelle mehrfach verwendete Begriff der annähernd lotrechten Ausrichtung generell, d.h. im Zusammenhang der gesamten vorliegenden Anmeldung, auch eine exakt lotrechte Ausrichtung umfassen soll.

Wahlweise kann das L-förmige Formelement aus mehreren relativ zueinander verschiebbaren Segmenten bestehen. Hierdurch kann es sein, dass das L-förmige Formelement an unterschiedliche Abmessungen und/oder an eine unterschiedliche oder variable Anzahl an entgegenzunehmenden Umverpackungen und/oder Kartonagen anpassbar ist.

Somit kann die mindestens eine Verbringungseinrichtung ein L-förmiges Formelement zum Ausrichten und Entgegennehmen von bereits zu einer Kartonage und/oder Umverpackung aufgefalteten Verpackungsmitteln aufweisen. Wie soeben erwähnt, ist es denkbar, dass das Verbringungswerkzeug hierzu als L-förmiges Formelement ausgebildet ist.

Es kann vorgesehen sein, dass die Verpackungsvorrichtung wenigstens ein erstes L-förmiges Formelement umfasst, welches für ein Entgegennehmen und Ausrichten von ersten bereits zu einer Kartonage und/oder Umverpackung aufgefalteten Verpackungsmitteln vorbereitet ist. Zudem kann die Verpackungsvorrichtung mindestens ein zweites L-förmiges Formelement umfassen, welches auf ein Entgegennehmen und Ausrichten von zweiten bereits zu einer Kartonage und/oder Umverpackung aufgefalteten Verpackungsmitteln vorbereitet ist. Hierbei kann vorgesehen sein, dass sich Abmessungen der ersten und zweiten bereits zu einer Kartonage und/oder Umverpackung aufgefalteten Verpackungsmittel voneinander unterscheiden. Weiter kann wahlweise das erste L-förmige Formelement und/oder das zweite L-förmige Formelement von der mindestens einen Verbringungseinrichtung zum Entgegennehmen und Ausrichten von jeweiligen bereits zu einer Kartonage und/oder Umverpackung aufgefalteten Verpackungsmitteln einsetzbar sein. Das erste L-förmige Formelement und/oder das zweite L-förmige Formelement können somit von der mindestens einen Verbringungseinrichtung abnehmbar ausgebildet sein. Die Verpackungsvorrichtung bzw. die mindestens eine Verbringungseinrichtung kann hierdurch auf einfache und unkomplizierte Art und Weise an unterschiedliche Abmessungen von bereits zu einer Kartonage und/oder Umverpackung aufgefalteten oder noch aufzufaltenden Verpackungsmitteln angepasst werden.

Weiter kann vorgesehen sein, dass die mindestens eine Verbringungseinrichtung wenigstens eine Einsetzhilfe umfasst. Die wenigstens eine Einsetzhilfe kann zum Halten und/oder Abstützen jeweiliger bereits zu einer Kartonage und/oder Umverpackung aufgefalteter Verpackungsmittel während des Einsetzens jeweiliger Artikel ausgebildet sein. Denkbar ist hierbei, dass die wenigstens eine Einsetzhilfe über mindestens einen Vorsprung und/oder mindestens einen Finger verfügt, welcher jeweilige mindestens eine Vorsprung und/oder mindestens eine Finger durch Eintauchen in eine durch ein Gefache eines bereits zu einer Umverpackung aufgefalteten Verpackungsmittels gebildeten Kammer das jeweilige bereits zu einer jeweiligen Umverpackung aufgefaltete Verpackungsmittel in seiner jeweiligen Position halten bzw. abstützen kann. Auch kann ein ggf. als Bestandteil der wenigstens einen Einsetzhilfe vorgesehener Gegenhalter vorgesehen sein, der zum Halten und/oder Abstützen des jeweiligen bereits zu einer Kartonage und/oder Umverpackung aufgefalteten Verpackungsmittels mit dem jeweiligen bereits zu einer Kartonage und/oder Umverpackung aufgefalteten Verpackungsmittel kraftbeaufschlagt in Anlage gebracht werden kann.

Auch kann es sein, dass die wenigstens eine Einsetzhilfe eine vorzugsweise als Rahmen ausgebildete Führung für Artikel zum Einsetzen in die jeweilige durch ein bereits aufgefaltetes Verpackungsmittel ausgebildete Kartonage und/oder Umverpackung bereitstellt. Die vorzugsweise als Rahmen ausgebildete Führung kann somit oberhalb des jeweiligen bereits zu einer Kartonage und/oder Umverpackung aufgefalteten Verpackungsmittels positioniert werden, woraufhin die jeweiligen Artikel bzw. Getränkebehälter über den Manipulator in das jeweilige bereits zu einer Kartonage und/oder Umverpackung aufgefaltete Verpackungsmittel eingesetzt werden und hierbei die vorzugsweise als Rahmen ausgebildete Führung passieren bzw. hierbei durch die vorzugsweise als Rahmen ausgebildete Führung hindurchtreten.

Auch ist es vorstellbar, dass die vorzugsweise als Rahmen ausgebildete Führung kraftbeaufschlagt auf zu einer Umverpackung und/oder Kartonage aufgefaltete Verpackungsmittel aufsetzbar ist, so dass das jeweilige bereits zu einer Umverpackung und/oder Kartonage aufgefaltete Verpackungsmittel durch oder über die kraftbeaufschlagt aufgesetzte und vorzugsweise als Rahmen ausgebildete Führung gehalten wird.

Auch kann die Verpackungsvorrichtung wenigstens einen Stützarm umfassen, welcher wenigstens eine Stützarm zum Abstützen einer jeweiligen durch ein aufgefaltetes Verpackungsmittel ausgebildeten Umverpackung und/oder Kartonage während des Einsetzens jeweiliger Artikel ausgebildet ist. Wie vorhergehend bereits erwähnt, kann die mindestens eine Verbringungseinrichtung bzw. ein Verbringungswerkzeug der mindestens einen Verbringungseinrichtung eine ungefähr oder annähernd lotrecht verlaufende Orientierungsfläche bereitstellen. Es kann zudem sein, dass der wenigstens eine Stützarm und das Verbringungswerkzeug zusammenwirken, um ein jeweiliges über das Verbringungswerkzeug entgegengenommenes und bereits zu einer Umverpackung und/oder Kartonage aufgefaltetes Verpackungsmittel gegen die ungefähr oder annähernd lotrecht verlaufende Orientierungsfläche zu bewegen. Wahlweise kann der wenigstens eine Stützarm feststehen, wobei das Verbringungswerkzeug das entgegengenommene und bereits zu einer Umverpackung und/oder Kartonage aufgefaltete Verpackungsmittel gegen den wenigstens einen Stützarm bewegt, so dass das bereits zu einer Umverpackung und/oder Kartonage aufgefaltete Verpackungsmittel hierdurch vom wenigstens einen Stützarm geschoben wird und mit der lotrecht verlaufenden Orientierungsfläche in Anlage gelangt.

Bewährt haben sich zudem Ausführungsformen, bei welchen der wenigstens eine Stützarm hängend und in Richtung nach unten weisend von der wenigstens einen Einsetzhilfe getragen wird. Die vorzugsweise als Rahmen ausgebildete Führung und der wenigstens eine Stützarm können somit mechanisch aneinander gekoppelt sein. In denkbaren Ausführungsformen kann vorgesehen sein, dass der wenigstens eine Stützarm selektiv in mehreren unterschiedlichen Positionen, die in vertikaler Richtung zueinander versetzt sind, an der vorzugsweise als Rahmen ausgebildeten Führung befestigbar ist.

Zur Lösung der oben genannten Aufgabe schlägt die vorliegende Erfindung zudem ein Verfahren mit den Merkmalen des unabhängigen Verfahrensanspruchs vor. Dieses Verfahren dient dem Einbringen von Artikeln, wie Getränkebehälter oder dergleichen, in zu Kartonagen und/oder Umverpackungen aufgefaltete Verpackungsmittel. Merkmale, welche zuvor bereits im Zusammenhang mit diversen Ausführungsformen der oben erläuterten erfindungsgemäßen Verpackungsvorrichtung beschrieben wurden, können ebenso bei diversen Ausführungsformen des nachfolgend beschriebenen Verfahrens vorgesehen sein und werden deshalb stellenweise nicht mehrfach oder nochmals erwähnt. Zudem können nachfolgend beschriebene Merkmale, welche diverse Ausführungsformen des Verfahrens betreffen, bei vorherig bereits beschriebener Verpackungsvorrichtung vorgesehen sein. Es ist denkbar, dass die Verpackungsvorrichtung zur Umsetzung des nachfolgend beschriebenen Verfahrens ausgebildet bzw. vorbereitet ist. Außerdem ist es vorstellbar, dass das erfindungsgemäße Verfahren mit einer Verpackungsvorrichtung durchzuführen ist, wie sie zuvor in unterschiedlichen Ausführungsvarianten beschrieben wurde.

Im Rahmen eines Schrittes des erfindungsgemäßen Verfahrens wird ein bereits zu einer Kartonage und/oder Umverpackung aufgefaltetes Verpackungsmittel über mindestens eine Verbringungseinrichtung entgegengenommen und hierauf mittels der mindestens einen Verbringungseinrichtung an eine Transporteinrichtung überführt.

Weiterhin wird mindestens ein Artikel in ein jeweiliges bereits zu einer Kartonage und/oder Umverpackung aufgefaltetes Verpackungsmittel eingesetzt und das bereits zu einer Kartonage und/oder Umverpackung aufgefaltete und an die Transporteinrichtung überführte Verpackungsmittel zusammen mit dem jeweiligen eingesetzten mindestens einen Artikel über die Transporteinrichtung abtransportiert. Es sei an dieser Stelle nochmals darauf hingewiesen, dass die Artikel bspw. durch Getränkebehälter wie Dosen oder Flaschen oder durch andere Stückgüter, die in Umverpackungen eingesetzt werden sollen, gebildet sein können.

Es ist vorgesehen, dass das bereits zu einer Kartonage und/oder Umverpackung aufgefaltete Verpackungsmittel über die mindestens eine Verbringungseinrichtung ausgerichtet wird und hierbei in eine Orientierung gelangt oder gebracht wird, welche auf das Einsetzen des mindestens einen Artikels in das jeweilige bereits zu einer Kartonage und/oder Umverpackung aufgefaltete Verpackungsmittel abgestimmt ist.

Weiterhin kann vorgesehen sein, dass eine Aufrichteinrichtung ein Verpackungsmittel auffaltet und hierdurch aus dem Verpackungsmittel eine Kartonage und/oder Umverpackung bildet. Eine Vielzahl an Verpackungsmitteln kann in gestapelter Form bereitgestellt werden, wobei die Aufrichteinrichtung ein jeweiliges zuoberst auf dem Stapel angeordnetes Verpackungsmittel vom Stapel abnimmt und auffaltet und hierdurch aus dem jeweiligen Verpackungsmittel eine Kartonage und/oder Umverpackung bildet.

Weiter kann die mindestens eine Verbringungseinrichtung und/oder ein als Bestandteil der mindestens einen Verbringungseinrichtung ausgebildetes Verbringungswerkzeug zur Entgegennahme eines jeweiligen bereits zu einer Kartonage und/oder Umverpackung aufgefalteten Verpackungsmittels und zur Überführung des mindestens einen entgegengenommenen und bereits zu einer Kartonage und/oder Umverpackung aufgefalteten Verpackungsmittels an die Transporteinrichtung zwischen der Transporteinrichtung und der Aufrichteinrichtung hin und her bewegt werden.

Auch kann es sein, dass die mindestens eine Verbringungseinrichtung und/oder ein als Bestandteil der mindestens einen Verbringungseinrichtung ausgebildetes Verbringungswerkzeug eine lotrecht verlaufende Orientierungsfläche bereitstellt, mit welcher lotrecht verlaufenden Orientierungsfläche ein bereits zu einer Kartonage und/oder Umverpackung aufgefaltetes Verpackungsmittel in Anlage gebracht wird und hieraus resultierend in die Orientierung gelangt, welche auf das Einsetzen des mindestens einen Artikels in das jeweilige bereits zu einer Kartonage und/oder Umverpackung aufgefaltete Verpackungsmittel abgestimmt ist.

Bewährt haben sich Ausführungsformen, bei welchen das jeweilige bereits zu einer Kartonage und/oder Umverpackung aufgefaltete Verpackungsmittel bereits während der Entgegennahme über die mindestens eine Verbringungseinrichtung bzw. das Verbringungswerkzeug mit der lotrecht verlaufenden Orientierungsfläche in Anlage bzw. bündige Anlage gebracht wird. Alternativ oder ergänzend kann es sein, dass das bereits zu einer Kartonage und/oder Umverpackung aufgefaltete Verpackungsmittel während einer Bewegung in Richtung der Transporteinrichtung mit wenigstens einem im Bereich der Transporteinrichtung befindlichem Stützarm in Kontakt gerät, welcher das bereits zu einer Kartonage und/oder Umverpackung aufgefaltete Verpackungsmittel gegen die lotrecht verlaufende Orientierungsfläche in bündige Anlage bringt bzw. schiebt. Insbesondere kann der im Bereich der Transporteinrichtung befindliche wenigstens eine Stützarm das bereits zu einer Kartonage und/oder Umverpackung aufgefaltete Verpackungsmittel gegen die ungefähr oder annähernd lotrecht verlaufende Orientierungsfläche schieben, so dass das bereits zu einer Kartonage und/oder Umverpackung aufgefaltete Verpackungsmittel hierdurch bündig mit der Orientierungsfläche in Anlage gerät.

Auch kann es sein, dass der im Bereich der Transporteinrichtung befindliche wenigstens eine Stützarm seinen Kontakt zum jeweiligen bereits zu einer Kartonage und/oder Umverpackung aufgefalteten Verpackungsmittel während des jeweiligen Einsetzens von Artikeln beibehält.

Es ist denkbar, dass die Verbringungseinrichtung wenigstens eine Einsetzhilfe umfasst. Hierbei kann die wenigstens eine Einsetzhilfe ein jeweiliges bereits zu einer Kartonage und/oder Umverpackung aufgefaltetes Verpackungsmittel zeitlich während des Einsetzens jeweiliger Artikel halten und/oder stützen. Auch kann es sein, dass die wenigstens eine Einsetzhilfe eine vorzugsweise als Rahmen ausgebildete Führung für Artikel bereitstellt, durch welche vorzugsweise als Rahmen ausgebildete Führung Artikel während des Einsetzens in die jeweilige durch ein aufgefaltetes Verpackungsmittel gebildete Kartonage bzw. während des Einsetzens in die jeweilige durch ein aufgefaltetes Verpackungsmittel gebildete Umverpackung hindurch bewegt werden.

Es haben sich Ausführungsformen bewährt, bei welchen die wenigstens eine als Bestandteil der mindestens einen Verbringungseinrichtung ausgebildete Einsetzhilfe ein bereits zu einer Kartonage und/oder Umverpackung aufgefaltetes Verpackungsmittel im Bereich der Transporteinrichtung hält, woraufhin ein das bereits zu einer Kartonage und/oder Umverpackung aufgefaltete Verpackungsmittel bis dahin tragendes Verbringungswerkzeug der mindestens einen Verbringungseinrichtung in Gegenrichtung zu einer Oberfläche der Transporteinrichtung, d.h. in aller Regel in Richtung nach oben, bewegt wird, so dass das bereits zu einer Kartonage und/oder Umverpackung aufgefaltete Verpackungsmittel seinen Kontakt zum Verbringungswerkzeug verliert und auf die Transporteinrichtung aufsetzt.

Hierbei kann es sein, dass die Bewegung des Verbringungswerkzeuges in Gegenrichtung zu einer Oberfläche der Transporteinrichtung vor und/oder während des Einsetzens von Artikeln in das im Bereich der Transporteinrichtung gehaltene und bereits zu einer Kartonage und/oder Umverpackung aufgefaltete Verpackungsmittel eingeleitet wird.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So dient die in verschiedenen Ausführungsvarianten bereits beschriebene sowie in weiteren Abwandlungen nachfolgend nochmals erläuterte Verpackungsvorrichtung dem Einsetzen von Artikeln, welche etwa durch Getränkebehälter gebildet sein können, in hierfür vorgesehene und entsprechend hierfür vorbereitend behandelte und/oder umgeformte Umverpackungen.

Die Verpackungsvorrichtung umfasst eine Transporteinrichtung, die dazu eingerichtet ist, Umverpackungen sowie dort eingesetzte Artikel in definierter Richtung zu transportieren. Vorzugsweise sind im Bereich der Transporteinrichtung keine Führungsgeländer vorgesehen, um die jeweiligen Umverpackungen während des Einsetzens von Artikeln bzw. Getränkebehältern zu stützen und während einer Bewegung der Umverpackungen sowie der hierin eingesetzten und bspw. durch Getränkebehälter gebildeten Artikel in der definierten oder vorgesehenen Richtung zu führen. Die Transporteinrichtung kann insbesondere als Horizontalfördereinrichtung ausgebildet sein und ein umlaufend geführtes Transportband umfassen, auf dem die Umverpackungen stehend geführt bzw. transportiert werden. Weiterhin umfasst die Verpackungsvorrichtung vorzugsweise einen Zulauf, welcher Artikel bzw. Getränkebehälter zum Einsetzen in Umverpackungen bereitstellt und hierzu in einer weiteren definierten Richtung fördert bzw. transportiert. Eine Förderrichtung der Transporteinrichtung und eine Förderrichtung des Zulaufs sind typischerweise parallel zueinander orientiert und verlaufen entgegengesetzt zueinander. Über den Zulauf werden mehrere Reihen an Artikeln bzw. Getränkebehältern bereitgestellt.

Eine Aufrichteinrichtung ist dazu vorgesehen, Verpackungsmittel aufzufalten und über das Aufrichten aus den Verpackungsmitteln entsprechende Umverpackungen zu bilden. In der Praxis können die noch nicht aufgefalteten Verpackungsmittel auf einem in einem Arbeitsbereich der Aufrichteinrichtung befindlichem Stapel in liegender Form bereitgestellt, mittels der Aufrichteinrichtung erfasst, aufgefaltet und vom Stapel abgenommen werden. Die Umverpackungen können bspw. Gefache umfassen oder enthalten, die sich innerhalb der Umverpackung befinden und eine Vielzahl an Kammern bilden. In jede durch das Gefache gebildete Kammer wird ein Artikel bzw. Getränkebehälter eingebracht. Die Gefache können über die Aufrichteinrichtung zusammen mit der gesamten Umverpackung aufgefaltet bzw. aufgezogen werden. Eine jeweilige Umverpackung kann somit mehrere Artikel bzw. Getränkebehälter aufnehmen, die jeweils im Gefache stehen und durch die Wände des Gefaches voneinander getrennt und gleichzeitig durch das Gefache in geordneter Anordnung gehalten sind.

Aufgefaltet und als Umverpackung werden die Verpackungsmittel sodann mittels einer Verbringungseinrichtung entgegengenommen. Die Verbringungseinrichtung kann zur Entgegennahme der bereits aufgefalteten und als Umverpackung und/oder Kartonage ausgebildeten Verpackungsmittel ein Verbringungswerkzeug aufweisen. Das Verbringungswerkzeug kann zwischen der Aufrichteinrichtung und der Transporteinrichtung hin und her bewegt werden; zudem kann das Verbringungswerkzeug bspw. durch ein L-förmiges Formelement gebildet sein. Das Verbringungswerkzeug kann zur Entgegennahme mehrerer bereits zu einer Umverpackung aufgefalteter Verpackungsmittel ausgebildet sein. Zudem können mehrere bereits zu einer Umverpackung aufgefaltete Verpackungsmittel zeitgleich durch das als Bestandteil der Verbringungseinrichtung ausgebildete Verbringungswerkzeug aufgenommen werden. Das Verbringungswerkzeug bzw. das L-förmiges Formelement stellt/stellen hierbei eine horizontale Standfläche zur Entgegennahme mehrerer Umverpackungen bereit. Weiter besitzt das Verbringungswerkzeug bzw. das L-förmige Formelement eine Orientierungsfläche, welche in ungefähr oder annähernd lotrechter Richtung verläuft.

Wird ein bereits zu einer Umverpackung aufgefaltetes Verpackungsmittel vom Verbringungswerkzeug bzw. von dem L-förmigen Formelement entgegengenommen, so kann die jeweilige Umverpackung über die Aufrichteinrichtung derart auf das Verbringungswerkzeug aufgesetzt werden, dass bereits zu diesem Zeitpunkt die im Bereich der Orientierungsfläche zu positionierende Umverpackung mit der Orientierungsfläche bündig in Anlage gerät sowie hierdurch ausgerichtet und in eine Orientierung überführt wird, welche auf das jeweilige spätere Einsetzen von Artikeln bzw. Getränkebehältern abgestimmt ist. Auch ist es denkbar, dass die Aufrichteinrichtung bereits zu einer Umverpackung aufgefaltete Verpackungsmittel zunächst auf das Verbringungswerkzeug aufsetzt, ohne dass eine Umverpackung hierbei bündig an der Orientierungsfläche anliegt. Das Ausrichten kann sodann zu einem späteren Zeitpunkt und unter Zuhilfenahme eines hierfür ausgebildeten Stützarmes erfolgen.

Vorstellbar ist zudem, dass die jeweilige Umverpackung über die Aufrichteinrichtung derart auf das Verbringungswerkzeug aufgesetzt wird, dass bereits zu diesem Zeitpunkt die im Bereich der Orientierungsfläche zu positionierende Umverpackung mit der Orientierungsfläche bündig in Anlage gerät sowie hierdurch ausgerichtet und in eine Orientierung überführt wird, welche auf das jeweilige spätere Einsetzen von Artikeln bzw. von Getränkebehältern abgestimmt ist. Da die jeweilige vom Verbringungswerkzeug aufgenommene Umverpackung während einer Bewegung in Richtung der Transporteinrichtung ihre bündige Anlage an der Orientierungsfläche verlieren kann bzw. ggf. ungewollt verliert, kann vorgesehen sein, dass der Stützarm die jeweilige Umverpackung erneut bündig an der Orientierungsfläche ausrichtet bzw. bündig mit der Orientierungsfläche in Anlage bringt.

Die weitere Umverpackung, welche zeitgleich vom Verbringungswerkzeug bzw. von dem L-förmigen Formelement getragen werden kann, steht mit einer seitlichen Mantelfläche mit der Umverpackung in Oberflächenkontakt, welche Umverpackung an der Orientierungsfläche anliegt. Sofern die zuvor erwähnte Umverpackung bereits bündig an der Orientierungsfläche anliegt, ist auch die weitere nicht unmittelbar mit der Orientierungsfläche in Oberflächenkontakt stehende und vom Verbringungswerkzeug getragene Umverpackung hierdurch ausgerichtet und in eine Orientierung gebracht, welche auf das jeweilige spätere Einsetzen von Artikeln bzw. Getränkebehältern abgestimmt ist.

Die Verpackungsvorrichtung bzw. die Verbringungseinrichtung umfasst/umfassen zudem eine Einsetzhilfe mit einer für Artikel bzw. Getränkebehälter vorgesehenen Führung, die wahlweise als Rahmen ausgebildet sein kann. Zudem ist der zuvor bereits erwähnte Stützarm Bestandteil der Einsetzhilfe. In einer Ausführungsform der Vorrichtung können die Führung und der Stützarm mechanisch aneinander gekoppelt sein. Es sind jedoch auch Ausführungsformen vorstellbar, bei welchen eine solche mechanische Koppelung nicht vorhanden ist oder bei welchen die Verpackungsvorrichtung bzw. die Verbringungseinrichtung lediglich eine Führung oder einen Stützarm umfasst.

Weiterhin umfasst die erfindungsgemäße Vorrichtung vorzugsweise einen Manipulator, welcher Artikel bzw. Getränkebehälter vom Zulauf entgegennehmen und nachfolgend in Umverpackungen einbringen bzw. einsetzen kann. Typischerweise wirken der Manipulator und die Einsetzhilfe für das Einsetzen von Artikeln bzw. Getränkebehältern in Umverpackungen zusammen. Um Artikel bzw. Getränkebehälter vom Zulauf entgegennehmen bzw. temporär entgegennehmen zu können, verfügt der Manipulator über eine Vielzahl an Greifköpfen. In diversen Ausführungsformen können die Greifköpfe zur temporären Entgegennahme von Artikeln bzw. Getränkebehältern bspw. eine mechanische und/oder pneumatische Verbindung zu den jeweiligen Artikeln bzw. Getränkebehältern herstellen. D.h., die Greifköpfe können bspw. Sauggreifer oder Greiftulpen o. dgl. zur Aufnahme der Behälter oder Flaschen und zu deren Freigabe an einer vorgesehenen Absetzposition sein.

Vorstellbar ist zudem ein Handhabungseinrichtung oder ein Portalsystem, welche/welches als Bestandteil des Manipulators ausgebildet ist und die Komponenten des Manipulators zwischen der Transporteinrichtung und dem Zulauf hin und her bewegen kann. Ebenso kann das Verbringungswerkzeug eine Handhabungseinrichtung und/oder ein Portalsystem umfassen, von welcher Handhabungseinrichtung und/oder welchem Portalsystem das eine Orientierungsfläche für Artikel bzw. Getränkebehälter aufweisende L-förmige Formelement getragen bzw. zwischen der Aufrichteinrichtung und der Transporteinrichtung hin und her bewegt wird.

Nachfolgend werden weitere Verfahrensaspekte oder -schritte erläutert. So kann das Verbringungswerkzeug bzw. das L-förmige Formstück in Richtung zu einer Oberfläche der Transporteinrichtung bewegt werden, bis das Verbringungswerkzeug bzw. das L-förmige Formstück die Transporteinrichtung erreicht hat und unmittelbar oberhalb der Transporteinrichtung angeordnet ist. Hierbei kann die nicht unmittelbar mit der Orientierungsfläche des Verbringungswerkzeuges in Oberflächenkontakt stehende Umverpackung bzw. eine seitliche Mantelfläche der nicht unmittelbar mit der Orientierungsfläche des Verbringungswerkzeuges in Oberflächenkontakt stehenden Umverpackung durch die Bewegung des Verbringungswerkzeuges mit dem in Richtung nach unten weisenden Stützarm der Einsetzhilfe in Anlage gelangt sein. Durch die Bewegung des Verbringungswerkzeuges in Richtung des Stützarmes schiebt der Stützarm eine Umverpackung bündig gegen die Orientierungsfläche bzw. richtet diese Umverpackung an der Orientierungsfläche aus. Da die Umverpackung somit bündig mit der Orientierungsfläche in Anlage steht und eine weitere Umverpackung mit einer äußeren Mantelfläche bündig an einer äußeren Mantelfläche der zuvor erwähnten Umverpackung anliegt, welche mit der Orientierungsfläche in Anlage steht, sind beide Umverpackungen in eine Orientierung gebracht, welche auf das nachfolgende Einsetzen von Artikeln bzw. Getränkebehältern über den Manipulator abgestimmt ist. Dieser Manipulator kann währenddessen bereits mehrere Artikel bzw. Getränkebehälter vom Zulauf abgehoben und zum Einsetzen in die vom Verbringungswerkzeug getragenen und ausgerichteten Umverpackungen in Richtung der Einsetzhilfe, in Richtung des Verbringungswerkzeuges sowie in Richtung der Transporteinrichtung bewegt haben.

Die Einsetzhilfe kann sodann in Richtung der Umverpackungen abgesenkt sein oder werden, wobei die Umverpackungen über die Einsetzhilfe gehalten werden. Es kann hierbei sein, dass die Einsetzhilfe über mindestens einen Vorsprung bzw. Finger verfügt, der in wenigstens eine durch ein Gefache der Umverpackung gebildete Kammer eingreift bzw. eingetaucht wird und die jeweilige Umverpackung hierdurch in ihrer Position hält. Auch ist bspw. denkbar, dass ein als Bestandteil einer Umverpackung ausgebildeter und in Richtung nach oben weisender Tragegriff von der Einsetzhilfe gegriffen bzw. erfasst wird und die jeweilige Umverpackung hierdurch über die Einsetzhilfe in ihrer jeweiligen Position gehalten wird. in der Praxis existieren darüber hinaus weitere und im Rahmen vorliegender Patentanmeldung nicht gesondert beschriebene Möglichkeiten, mit welchen die Umverpackungen über die Einsetzhilfe gehalten werden können.

Durch das Halten der Umverpackungen mittels der Einsetzhilfe kann das Verbringungswerkzeug bzw. das L-förmige Formelement in Richtung der Aufrichteinrichtung zurückbewegt werden, um von der Aufrichteinrichtung weitere bereits zu einer Umverpackung aufgefaltete Verpackungsmittel entgegenzunehmen. Da die Bewegung des Verbringungswerkzeuges bzw. des L-förmigen Formelementes zurück in Richtung der Aufrichteinrichtung normalerweise bereits vor dem Einsetzen von Artikeln bzw. Getränkebehältern in die Umverpackungen erfolgt, wird ein hoher Durchsatz bei der Verpackung von Artikeln bzw. Getränkebehältern mittels der Verpackungsvorrichtung erreicht.

Im Verlauf der Bewegung des Verbringungswerkzeuges bzw. des L-förmigen Formelementes in Richtung der Aufrichteinrichtung setzen die Umverpackungen auf die Transporteinrichtung auf bzw. verlieren ihren Kontakt zum Verbringungswerkzeug bzw. dem L-förmigen Formelement und werden weiterhin über die Einsetzhilfe gehalten. Auch der wahlweise als Bestandteil der Einsetzhilfe ausgebildete und in Richtung nach unten weisende Stützarm steht weiterhin mit der seitlichen Mantelfläche einer Umverpackung in Oberflächenkontakt.

In einem weiteren Schritt erreicht das Verbringungswerkzeug bzw. das L-förmige Formelement die Aufrichteinrichtung, wobei diese weitere Umverpackungen für das als Bestandteil der Verbringungseinrichtung ausgebildete Verbringungswerkzeug bzw. das L-förmige Formelement bereitstellt. Hierzu verfügt die Aufrichteinrichtung über ein Transportwerkzeug, welches zeitgleich mehrere bereits zu einer Umverpackung aufgefaltete Verpackungsmittel in Richtung des Verbringungswerkzeuges bzw. des L-förmigen Formelementes bewegt. Die nun auf die Transporteinrichtung aufgesetzten Umverpackungen werden weiterhin über die Einsetzhilfe in ihrer Position gehalten. Der Manipulator kann nun eine Position erreicht haben, bei welcher er allein durch eine vertikale Senkbewegung die vom Manipulator getragenen Artikel bzw. Getränkebehälter in die auf die Transporteinrichtung aufgesetzten Umverpackungen einsetzen kann. Da die Umverpackungen zuvor durch entsprechende Ausrichtung in eine Orientierung überführt wurden, welche auf das nachfolgende Einsetzen über den Manipulator abgestimmt ist, kann das nachfolgende Einsetzen zielgenau und ohne Probleme erfolgen. Die weiterhin mit den nun auf die Transporteinrichtung aufgesetzten Umverpackungen in Kontakt stehende Einsetzhilfe verhindert durch eine Anlage des Stützarmes an einer Umverpackung sowie das Halten der Umverpackungen in der beschriebenen Orientierung ein ungewolltes Rückfalten. Führungsgeländer, welche die bereits auf die Transporteinrichtung aufgesetzten Umverpackungen stützen und hierdurch ein ungewolltes Rückfalten verhindern, sind für die Verpackungsvorrichtung daher nicht notwendig.

Während des Absenkens des Manipulators zusammen mit den vom Manipulator getragenen Artikeln bzw. Getränkebehältern in Richtung der Transporteinrichtung wurden die Artikel bzw. Getränkebehälter durch die als Bestandteil der Einsetzhilfe ausgebildete Führung bzw. den als Bestandteil der Einsetzhilfe ausgebildeten Führungsrahmen hindurchbewegt. Hierdurch kann gewährleistet werden, dass die Artikel bzw. Getränkebehälter positionsgenau in ihre jeweilige durch ein Gefache der Umverpackung ausgebildete Kammer geführt werden. Die auf die Transporteinrichtung aufgesetzten Umverpackungen werden während des Einsetzens weiterhin über die Einsetzhilfe gehalten. Auch steht der als Bestandteil der Einsetzhilfe ausgebildete Stützarm weiterhin mit einer seitlichen Mantelfläche der bereits auf die Transporteinrichtung aufgesetzten Umverpackung in Anlage.

Das Transportwerkzeug der Aufrichteinrichtung hat nun weitere zu einer Umverpackung aufgefaltete Verpackungsmittel vollständig auf das Verbringungswerkzeug aufgesetzt, wobei die vom Verbringungswerkzeug getragene Umverpackung bündig an der Orientierungsfläche anliegt und hierdurch ausgerichtet ist. Der Manipulator hat während dieses Verfahrensschrittes die zuvor noch getragenen Artikel bzw. Getränkebehälter in die jeweilige zugeordnete Umverpackung eingesetzt und wurde in vertikaler Richtung gegenüber oder von der Transporteinrichtung angehoben. Auch werden die Umverpackungen nicht mehr über die Einsetzhilfe gehalten, da die Einsetzhilfe in vertikaler Richtung von der Transporteinrichtung wegbewegt bzw. von dieser abgehoben wurde. Der zuvor noch bestehende Kontakt zwischen dem Stützarm und einer seitlichen Mantelfläche der auf die Transporteinrichtung aufgesetzten Umverpackung wurde aufgehoben. Über den Zulauf können bereits weitere Artikel bzw. Getränkebehälter bereitgestellt werden. Der Manipulator kann daher zur Entgegennahme weiterer Artikel bzw. Getränkebehälter, die für das Einsetzen in die vom Verbringungswerkzeug getragenen Umverpackungen vorgesehen sind, in Richtung des Zulaufs bewegt werden.

Die zuvor noch auf die Transporteinrichtung aufgesetzten Umverpackungen, in welche die Artikel bzw. Getränkebehälter eingesetzt wurden, werden anschließend durch die Transporteinrichtung abgefördert und wegbewegt. So können die Umverpackungen zusammen mit den eingesetzten Artikeln bzw. Getränkebehältern über die Transporteinrichtung bspw. in Richtung einer Gruppierstation und/oder Palettierstation bewegt werden. Währenddessen steht der Manipulator über seine Greifköpfe wieder mit weiteren Artikeln bzw. Getränkebehältern in Kontakt, so dass sich die zuvor bereits beschriebenen Schritte wiederholen können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsform einer Verpackungsvorrichtung und verdeutlicht einen Schritt, wie er bei diversen Ausführungsformen des erfindungsgemäßen Verfahrens vorgesehen sein kann.
Figuren 2 bis 7 zeigen jeweils die Ausführungsform einer Verpackungsvorrichtung gemäß Fig. 1 und verdeutlichen weitere Schritte, wie sie bei Ausführungsformen des erfindungsgemäßen Verfahrens vorgesehen sein können.
Figuren 8 bis 10 zeigen jeweils eine schematische Ansicht einer Ausführungsform einer erfindungsgemäßen Verpackungsvorrichtung.

Für gleiche oder gleich wirkende Elemente der Erfindung werden in der nachfolgenden Figurenbeschreibung in der Regel jeweils identische Bezugszeichen verwendet. Ferner werden der Übersicht halber teilweise nur solche Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es soll zudem darauf hingewiesen werden, dass sämtliche der nachfolgend beschriebenen Merkmale nicht in engem Zusammenhang mit weiteren Merkmalen des jeweiligen Ausführungsbeispiels verknüpft sind. Vielmehr können sämtliche nachfolgend beschriebenen Merkmale einzeln und losgelöst vom jeweiligen Ausführungsbeispiel bzw. im allgemeinen Zusammenhang vorgesehen sein.

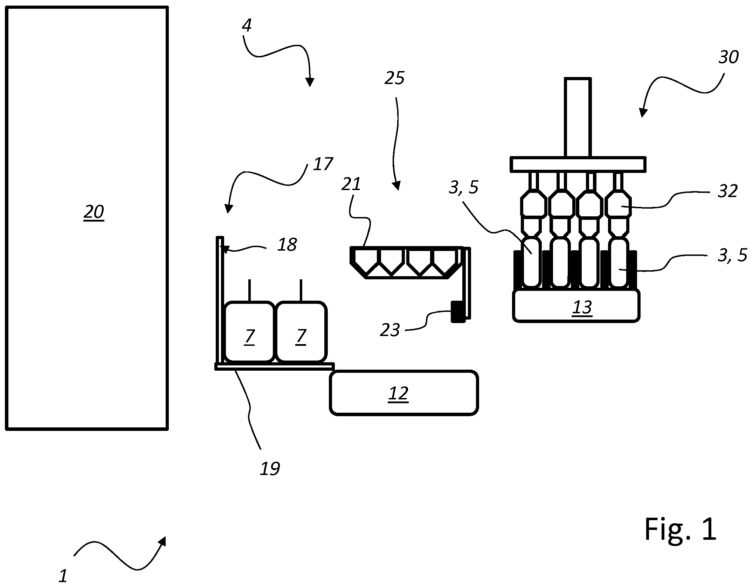

Die schematische Ansicht der Fig. 1 zeigt eine Ausführungsform einer Verpackungsvorrichtung 1. Mittels der Verpackungsvorrichtung 1 können Artikel 3, welche durch Getränkebehälter 5 ausgebildet sind, in Umverpackungen 7 eingesetzt werden.

Die Verpackungsvorrichtung 1 aus dem Ausführungsbeispiel gemäß Fig. 1 umfasst eine Transporteinrichtung 12. Die Transporteinrichtung 12 kann, wie nachfolgend noch beschrieben, Umverpackungen 7 sowie jeweilige in die Umverpackung 7 eingesetzten Artikel 3 in Richtung der Bildebene transportieren. Die schematische Ansicht der Fig. 1 lässt bereits erkennen, dass im Bereich der Transporteinrichtung 12 keine Führungsgeländer vorgesehen sind, um die jeweiligen Umverpackungen 7 während des Einsetzens von Artikeln 3 bzw. Getränkebehältern 5 zu stützen und während einer Bewegung der Umverpackungen 7 sowie der hierin eingesetzten und durch Getränkebehälter 5 ausgebildeten Artikel 3 in Richtung der Bildebene zu führen. Die mit der Bezugsziffer 12 bezeichnete Transporteinrichtung ist als Horizontalfördereinrichtung ausgebildet und umfasst ein umlaufend geführtes Transportband, auf welchem die Umverpackungen 7 aufstehen und mittels welchen umlaufend geführten Transportbandes die Umverpackungen 7 sowie die hierin eingesetzten Artikel 3 bzw. Getränkebehälter 5 in Richtung der Bildebene bewegt werden können.

Weiterhin ist ein als Bestandteil der Verpackungsvorrichtung 1 ausgebildeter Zulauf 13 gezeigt, welcher Artikel 3 bzw. Getränkebehälter 5 zum Einsetzen in Umverpackungen 7 bereitstellt und hierzu in Gegenrichtung der Bildebene fördert bzw. transportiert. Eine Förderrichtung der Transporteinrichtung 12 und eine Förderrichtung des Zulaufs 13 sind somit parallel zueinander orientiert und verlaufen entgegengesetzt zueinander. Über den Zulauf 13 werden mehrere Reihen an Artikeln 3 bzw. Getränkebehältern 5 bereitgestellt.

Die mit der Bezugsziffer 20 bezeichnete und vorliegend lediglich schematisch angedeutete Aufrichteinrichtung ist dazu vorgesehen, Verpackungsmittel aufzufalten und über das Aufrichten aus den Verpackungsmitteln entsprechende Umverpackungen 7 zu bilden. In der Praxis können die noch nicht aufgefalteten Verpackungsmittel auf einem in einem Arbeitsbereich der Aufrichteinrichtung 20 befindlichem Stapel in liegender Form bereitgestellt, mittels der Aufrichteinrichtung 20 erfasst, aufgefaltet und vom Stapel abgenommen werden. Die Umverpackungen 7 umfassen im Ausführungsbeispiel aus Fig. 1 nicht zu erkennende Gefache, die sich innerhalb der Umverpackung 7 befinden und eine Vielzahl an Kammern bilden. In eine jeweilige durch das Gefache gebildete Kammer wird ein Artikel 3 bzw. Getränkebehälter 5 eingebracht. Die Gefache können über die Aufrichteinrichtung 20 zusammen mit der gesamten Umverpackung 7 aufgefaltet bzw. aufgezogen werden. Eine jeweilige Umverpackung 7 kann somit mehrere Artikel 3 bzw. Getränkebehälter 5 aufnehmen.

Aufgefaltet und als Umverpackung 7 werden die Verpackungsmittel sodann mittels einer Verbringungseinrichtung 4 entgegengenommen. Die Verbringungseinrichtung 4 besitzt zur Entgegennahme der bereits aufgefalteten und als Umverpackung und/oder Kartonage ausgebildeten Verpackungsmittels ein Verbringungswerkzeug 17. Das Verbringungswerkzeug 17 kann zwischen der Aufrichteinrichtung 20 und der Transporteinrichtung 12 hin und her bewegt werden; zudem ist das Verbringungswerkzeug 17 im gezeigten Ausführungsbeispiel als L-förmiges Formelement 19 ausgebildet.

Die Fig. 1 veranschaulicht hierbei, dass das Verbringungswerkzeug 17 zur Entgegennahme mehrerer bereits zu einer Umverpackung 7 aufgefalteter Verpackungsmittel ausgebildet ist bzw. dass mehrere bereits zu einer Umverpackung 7 aufgefaltete Verpackungsmittel zeitgleich durch das als Bestandteil der Verbringungseinrichtung 4 ausgebildete Verbringungswerkzeug 17 aufgenommen werden können. Das Verbringungswerkzeug 17 bzw. das L-förmiges Formelement 19 stellt/stellen eine horizontale Standfläche zur Entgegennahme mehrerer Umverpackungen 7 bereit. Weiter besitzt das Verbringungswerkzeug 17 bzw. das L-förmige Formelement 19 eine Orientierungsfläche, welche mit der Bezugsziffer 18 bezeichnet ist und in ungefähr oder annähernd lotrechter Richtung, hier im gezeigten Ausführungsbeispiel in exakt lotrechter Richtung verläuft.

Wird ein bereits zu einer Umverpackung 7 aufgefaltetes Verpackungsmittel vom Verbringungswerkzeug 17 bzw. dem L-förmigen Formelement 19 entgegengenommen, so kann die jeweilige Umverpackung 7 über die Aufrichteinrichtung 20 derart auf das Verbringungswerkzeug 17 aufgesetzt werden, dass bereits zu diesem Zeitpunkt die im Bereich der Orientierungsfläche 18 zu positionierende Umverpackung 7 mit der Orientierungsfläche 18 bündig in Anlage gerät sowie hierdurch ausgerichtet und in eine Orientierung überführt wird, welche auf das jeweilige spätere Einsetzen von Artikeln 3 bzw. Getränkebehältern 5 abgestimmt ist.

Auch ist es denkbar, dass die Aufrichteinrichtung 20 bereits zu einer Umverpackung 7 aufgefaltete Verpackungsmittel zunächst auf das Verbringungswerkzeug 17 aufsetzt, ohne dass eine Umverpackung hierbei bündig an der Orientierungsfläche 18 anliegt. Das Ausrichten kann sodann zu einem späteren Zeitpunkt, wie nachfolgend noch beschrieben, unter Zuhilfenahme des Stützarmes 23 erfolgen.

Vorstellbar ist zudem, dass die jeweilige Umverpackung über die Aufrichteinrichtung 20 derart auf das Verbringungswerkzeug 17 aufgesetzt wird, dass bereits zu diesem Zeitpunkt die im Bereich der Orientierungsfläche 18 zu positionierende Umverpackung 7 mit der Orientierungsfläche 18 bündig in Anlage gerät sowie hierdurch ausgerichtet und in eine Orientierung überführt wird, welche auf das jeweilige spätere Einsetzen von Artikeln 3 bzw. von Getränkebehältern 5 abgestimmt ist. Da die jeweilige vom Verbringungswerkzeug 17 aufgenommene Umverpackung 7 während einer Bewegung in Richtung der Transporteinrichtung 12 ihre bündige Anlage an der Orientierungsfläche verlieren kann bzw. ggf. ungewollt verliert, kann vorgesehen sein, dass der Stützarm 23 die jeweilige Umverpackung erneut bündig an der Orientierungsfläche 18 ausrichtet bzw. bündig mit der Orientierungsfläche 18 in Anlage bringt.

Die weitere Umverpackung 7, welche zeitgleich vom Verbringungswerkzeug 17 bzw. dem L-förmigen Formelement 19 getragen werden kann, steht mit einer seitlichen Mantelfläche mit der Umverpackung 7 in Oberflächenkontakt, welche Umverpackung 7 an der Orientierungsfläche 18 anliegt. Sofern die zuvor erwähnte Umverpackung 7 bereits bündig an der Orientierungsfläche 18 anliegt, ist auch die weitere nicht unmittelbar mit der Orientierungsfläche 18 in Oberflächenkontakt stehende und vom Verbringungswerkzeug 17 getragene Umverpackung 7 hierdurch ausgerichtet und in eine Orientierung gebracht, welche auf das jeweilige spätere Einsetzen von Artikeln 3 bzw. Getränkebehältern 5 abgestimmt ist.

Die Verpackungsvorrichtung 1 bzw. die Verbringungseinrichtung 4 umfasst/umfassen zudem eine Einsetzhilfe 25 mit einer für Artikel 3 bzw. Getränkebehälter 5 vorgesehenen Führung 21, die vorliegend als Rahmen ausgebildet ist. Zudem ist ein Stützarm 23 Bestandteil der Einsetzhilfe 25. In der Ausführungsform, wie sie durch Fig. 1 illustriert ist, sind die Führung 21 und der Stützarm 23 mechanisch aneinander gekoppelt. Es sind jedoch auch Ausführungsformen vorstellbar, bei welchen eine solche mechanische Koppelung nicht vorhanden ist oder bei welchen die Verpackungsvorrichtung 1 bzw. die Verbringungseinrichtung 4 lediglich eine Führung 21 oder einen Stützarm 23 umfasst.

Weiter ist ein Manipulator 30 vorgesehen, welcher Artikel 3 bzw. Getränkebehälter 5 vom Zulauf 13 entgegennehmen und nachfolgend in Umverpackungen 7 einbringen bzw. einsetzen kann. Wie nachfolgend noch beschrieben, wirken der Manipulator 30 und die Einsetzhilfe 25 für das Einsetzen von Artikeln 3 bzw. Getränkebehältern 5 in Umverpackungen 7 zusammen. Um Artikel 3 bzw. Getränkebehälter 5 vom Zulauf 13 entgegennehmen bzw. temporär entgegennehmen zu können, verfügt der Manipulator 30 über eine Vielzahl an Greifköpfen 32. In diversen Ausführungsformen können die Greifköpfe 32 zur temporären Entgegennahme von Artikeln 3 bzw. Getränkebehältern 5 bspw. eine mechanische und/oder pneumatische Verbindung zu den jeweiligen Artikeln 3 bzw. Getränkebehältern 5 herstellen. D.h., die Greifköpfe 32 können bspw. Sauggreifer oder Greiftulpen o. dgl. sein.

Weiter wird darauf hingewiesen, dass Fig. 1 den Manipulator 30 ggf. lediglich anteilig darstellt. Vorstellbar ist bspw., dass eine Handhabungseinrichtung oder ein Portalsystem vorgesehen ist, welche/welches als Bestandteil des Manipulators 30 ausgebildet ist und die in Fig. 1 zu erkennenden Komponenten des Manipulators 30 zwischen der Transporteinrichtung 12 und dem Zulauf 13 hin und her bewegen kann. Ebenso kann das Verbringungswerkzeug 17 eine in den Figuren vorliegender Patentanmeldung nicht mit dargestellte Handhabungseinrichtung und/oder ein in den Figuren vorliegender Patentanmeldung nicht mit dargestelltes Portalsystem umfassen, von welcher Handhabungseinrichtung und/oder welchem Portalsystem das eine Orientierungsfläche 18 für Artikel 3 bzw. Getränkebehälter 5 aufweisende L-förmige Formelement 19 getragen bzw. zwischen der Aufrichteinrichtung 20 und der Transporteinrichtung 12 hin und her bewegt wird.

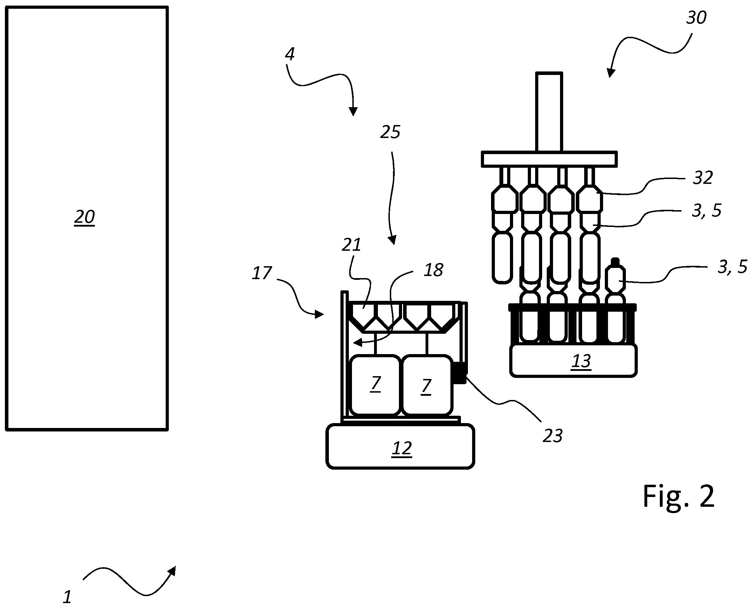

In Fig. 2 ist die Ausführungsform einer Verpackungsvorrichtung 1 gemäß Fig. 1 nochmals dargestellt. Weiter wird durch eine Zusammenschau der Figuren 1 und 2 ein Schritt verdeutlicht, wie er bei diversen Ausführungsformen eines erfindungsgemäßen Verfahrens vorgesehen sein kann.

Ausgehend von Fig. 1 wurde das Verbringungswerkzeug 17 bzw. das L-förmige Formstück 19 in Richtung der Transporteinrichtung 12 bewegt, wobei das Verbringungswerkzeug 17 bzw. das L-förmige Formstück 19 (gemäß Fig. 1) in der Darstellung der Fig. 2 die Transporteinrichtung 12 erreicht hat und unmittelbar oberhalb der Transporteinrichtung 12 angeordnet ist. Die Position der Einsetzhilfe 25 ist in Fig. 2 gegenüber der Position aus Fig. 1 unverändert. Die Darstellung der Fig. 2 lässt zudem erkennen, dass die nicht unmittelbar mit der Orientierungsfläche 18 des Verbringungswerkzeuges 17 in Oberflächenkontakt stehende Umverpackung 7 bzw. eine seitliche Mantelfläche der nicht unmittelbar mit der Orientierungsfläche 18 des Verbringungswerkzeuges 17 in Oberflächenkontakt stehenden Umverpackung 7 durch die Bewegung des Verbringungswerkzeuges 17 mit dem in Richtung nach unten weisenden Stützarm 23 der Einsetzhilfe 25 in Anlage gelangt. Durch die Bewegung des Verbringungswerkzeuges 17 in Richtung des Stützarmes 23 schiebt der Stützarm 23 die in Fig. 2 linksseitig dargestellte Umverpackung 7 bündig gegen die Orientierungsfläche 18 bzw. richtet die linksseitig dargestellte Umverpackung 7 an der Orientierungsfläche 18 aus. Da die linksseitig dargestellte Umverpackung 7 in Fig. 2 bündig mit der Orientierungsfläche 18 in Anlage steht und die weitere bzw. rechtsseitig dargestellte Umverpackung 7 mit einer äußeren Mantelfläche bündig an einer äußeren Mantelfläche der Umverpackung 7 anliegt, welche mit der Orientierungsfläche 18 in Anlage steht, sind beide Umverpackungen 7 in Fig. 2 in eine Orientierung gebracht, welche auf das nachfolgende Einsetzen von Artikeln 3 bzw. Getränkebehältern 5 über den Manipulator 30 abgestimmt ist.

Der Manipulator 30 hat in Fig. 2 bereits mehrere Artikel 3 bzw. Getränkebehälter 5 vom Zulauf 13 abgehoben und zum Einsetzen in die vom Verbringungswerkzeug 17 getragenen und ausgerichteten Umverpackungen 7 in Richtung der Einsetzhilfe 25, in Richtung des Verbringungswerkzeuges 17 sowie in Richtung der Transporteinrichtung 12 bewegt.

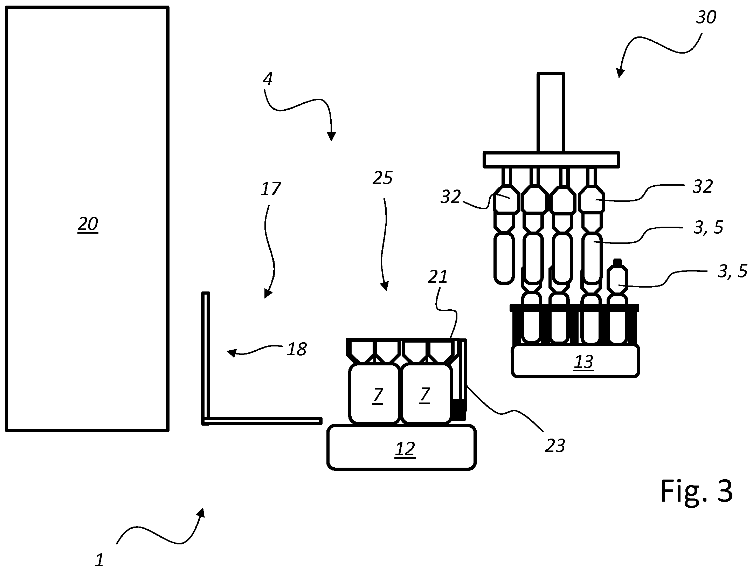

In Fig. 3 ist die Ausführungsform einer Verpackungsvorrichtung 1 aus Figuren 1 und 2 nochmals dargestellt. Weiter wird durch eine Zusammenschau der Figuren 2 und 3 ein Schritt verdeutlicht, wie er bei diversen Ausführungsformen eines erfindungsgemäßen Verfahrens vorgesehen sein kann. Die Einsetzhilfe 25 wurde in Richtung der Umverpackungen 7 abgesenkt, wobei bei der Position aus Fig. 3 die Umverpackungen 7 über die Einsetzhilfe 25 gehalten werden. Es kann hierbei sein, dass die Einsetzhilfe 25 über mindestens einen in den Figuren vorliegender Patentanmeldung nicht mit dargestellten Vorsprung bzw. Finger verfügt, der in wenigstens eine durch ein Gefache der Umverpackung 7 gebildete Kammer eingreift bzw. eingetaucht wird und die jeweilige Umverpackung 7 hierdurch in ihrer Position hält. Auch ist bspw. denkbar, dass ein als Bestandteil einer Umverpackung 7 ausgebildeter und in Richtung nach oben weisender Tragegriff von der Einsetzhilfe 25 gegriffen bzw. erfasst wird und die jeweilige Umverpackung 7 hierdurch über die Einsetzhilfe 25 in ihrer jeweiligen Position gehalten wird. in der Praxis existieren darüber hinaus weitere und im Rahmen vorliegender Patentanmeldung nicht gesamthaft beschriebene Möglichkeiten, mittels welchen die Umverpackungen 7 über die Einsetzhilfe 25 gehalten werden können.

Durch das Halten der Umverpackungen 7 mittels der Einsetzhilfe 25 kann das Verbringungswerkzeug 17 bzw. das L-förmige Formelement 19 (siehe hierzu die Fig. 1) in Richtung der Aufrichteinrichtung 20 zurückbewegt werden, um von der Aufrichteinrichtung 20 weitere bereits zu einer Umverpackung 7 aufgefaltete Verpackungsmittel entgegenzunehmen. Da die Bewegung des Verbringungswerkzeuges 17 bzw. des L-förmigen Formelementes 19 zurück in Richtung der Aufrichteinrichtung 20 bereits vor dem Einsetzen von Artikeln 3 bzw. Getränkebehältern 5 in die Umverpackungen 7 erfolgt, wird ein hoher Durchsatz bei der Verpackung von Artikeln 3 bzw. Getränkebehältern 5 mittels der Verpackungsvorrichtung 1 erreicht.

Im Verlauf der Bewegung des Verbringungswerkzeuges 17 bzw. des L-förmigen Formelementes 19 in Richtung der Aufrichteinrichtung 20 setzen die Umverpackungen 7 auf die Transporteinrichtung 12 auf bzw. verlieren ihren Kontakt zum Verbringungswerkzeug 17 bzw. dem L-förmigen Formelement 19 und werden weiterhin über die Einsetzhilfe 25 gehalten. Auch der vorliegend als Bestandteil der Einsetzhilfe 25 ausgebildete und in Richtung nach unten weisende Stützarm 23 steht weiterhin mit der seitlichen Mantelfläche einer Umverpackung 7 in Oberflächenkontakt.

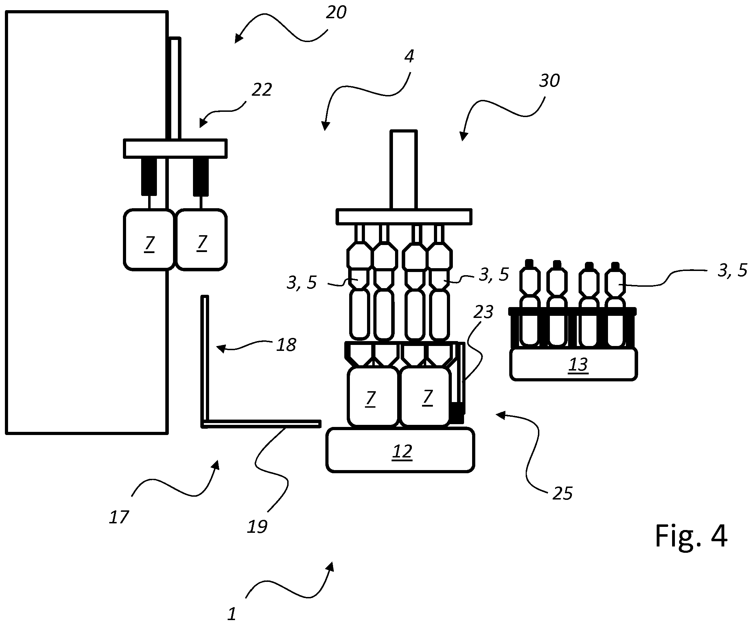

In Fig. 4 ist die Ausführungsform einer Verpackungsvorrichtung 1 aus Figuren 1 bis 3 nochmals dargestellt. Weiter wird durch eine Zusammenschau der Figuren 3 und 4 ein Schritt verdeutlicht, wie er bei diversen Ausführungsformen eines erfindungsgemäßen Verfahrens vorgesehen sein kann.

Da das Verbringungswerkzeug 17 bzw. das L-förmige Formelement 19 in Fig. 4 die Aufrichteinrichtung 20 erreicht hat, stellt die Aufrichteinrichtung 20 weitere Umverpackungen 7 für das als Bestandteil der Verbringungseinrichtung 4 ausgebildete Verbringungswerkzeug 17 bzw. das L-förmige Formelement 19 bereit. Hierzu verfügt die Aufrichteinrichtung 20 über ein Transportwerkzeug 22, welches zeitgleich mehrere bereits zu einer Umverpackung 7 aufgefaltete Verpackungsmittel in Richtung des Verbringungswerkzeuges 17 bzw. des L-förmigen Formelementes 19 bewegt.

Die Position der Einsetzhilfe 25 in Fig. 4 ist gegenüber ihrer Position aus Fig. 3 unverändert. Die nun auf die Transporteinrichtung 12 aufgesetzten Umverpackungen 7 werden weiterhin über die Einsetzhilfe 25 in ihrer Position gehalten. Der Manipulator 30 hat in Fig. 4 eine Position erreicht, bei welcher der Manipulator 30 allein durch eine vertikale Senkbewegung die vom Manipulator 30 getragenen Artikel 3 bzw. Getränkebehälter 5 in die auf die Transporteinrichtung 12 aufgesetzten Umverpackungen 7 einsetzen kann. Da die Umverpackungen 7 gemäß vorheriger Beschreibung durch Ausrichten in eine Orientierung überführt wurden, welche auf das nachfolgende Einsetzen über den Manipulator 30 abgestimmt ist, kann das nachfolgende Einsetzen zielgenau und ohne Probleme erfolgen. Die weiterhin mit den nun auf die Transporteinrichtung 12 aufgesetzten Umverpackungen 7 in Kontakt stehende Einsetzhilfe 25 verhindert durch eine Anlage des Stützarmes 23 an einer Umverpackung sowie das Halten der Umverpackungen in der beschriebenen Orientierung ein ungewolltes Rückfalten. Führungsgeländer, welche die bereits auf die Transporteinrichtung 12 aufgesetzten Umverpackungen 7 stützen und hierdurch ein ungewolltes Rückfalten verhindern, sind für die Verpackungsvorrichtung 1 daher nicht notwendig.

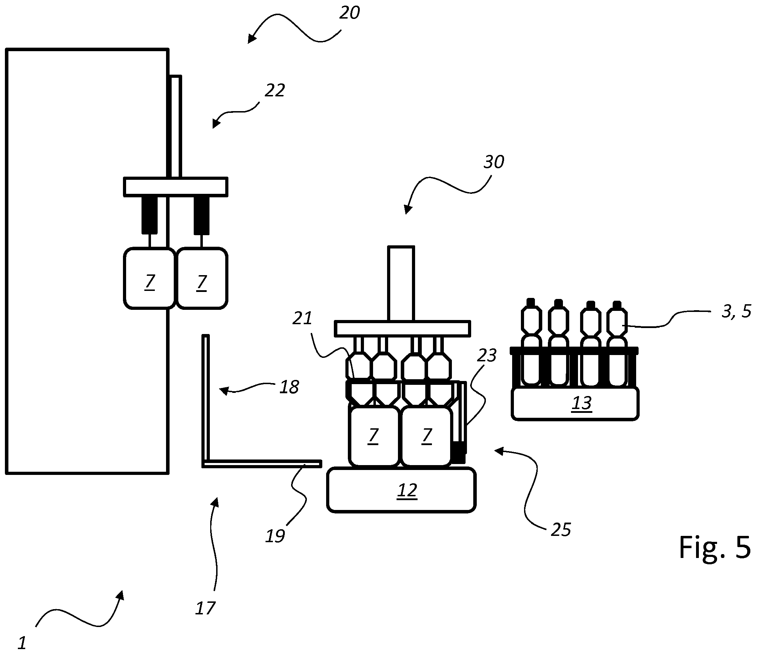

In Fig. 5 ist die Ausführungsform einer Verpackungsvorrichtung 1 aus Figuren 1 bis 4 nochmals dargestellt. Weiter wird durch eine Zusammenschau der Figuren 4 und 5 ein Schritt verdeutlicht, wie er bei diversen Ausführungsformen eines erfindungsgemäßen Verfahrens vorgesehen sein kann.

Der Manipulator 30 wurde in Fig. 5 zusammen mit den vom Manipulator 30 getragenen Artikeln 3 bzw. Getränkebehältern 5 in Richtung der Transporteinrichtung 12 abgesenkt. Während des Absenkens wurden die Artikel 3 bzw. Getränkebehälter 5 durch die als Bestandteil der Einsetzhilfe 25 ausgebildete Führung 21 bzw. den als Bestandteil der Einsetzhilfe 25 ausgebildeten Führungsrahmen hindurchbewegt. Hierdurch kann gewährleistet werden, dass die Artikel 3 bzw. Getränkebehälter 5 positionsgenau in ihre jeweilige durch ein Gefache der Umverpackung 7 ausgebildete Kammer geführt werden.

Die auf die Transporteinrichtung 12 aufgesetzten Umverpackungen 7 werden während des Einsetzens weiterhin über die Einsetzhilfe 25 gehalten. Auch steht der als Bestandteil der Einsetzhilfe 25 ausgebildete Stützarm 23 weiterhin mit einer seitlichen Mantelfläche der in Fig. 5 rechtsseitig dargestellten und bereits auf die Transporteinrichtung 12 aufgesetzten Umverpackung 7 in Anlage.

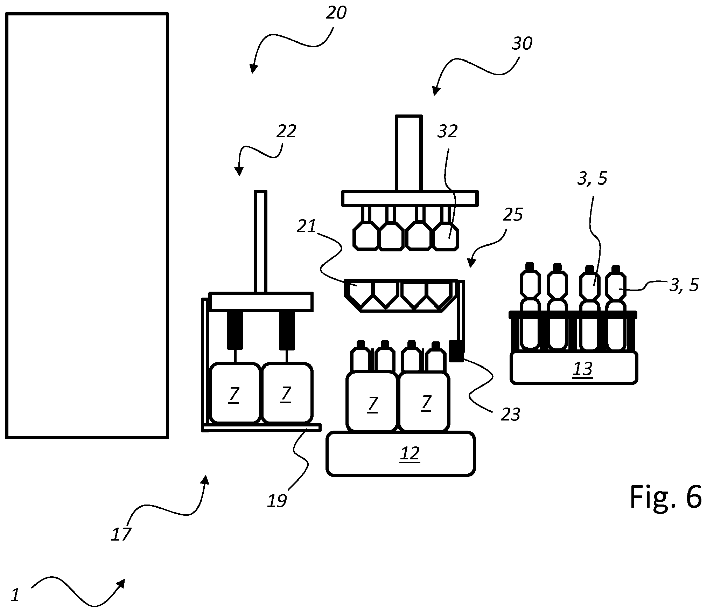

In Fig. 6 ist die Ausführungsform einer Verpackungsvorrichtung 1 aus Figuren 1 bis 5 nochmals dargestellt. Weiter wird durch eine Zusammenschau der Figuren 5 und 6 ein Schritt verdeutlicht, wie er bei diversen Ausführungsformen eines erfindungsgemäßen Verfahrens vorgesehen sein kann. Das Transportwerkzeug 22 der Aufrichteinrichtung 20 hat in Fig. 6 nun weitere zu einer Umverpackung 7 aufgefaltete Verpackungsmittel vollständig auf das Verbringungswerkzeug 17 aufgesetzt, wobei die linksseitig dargestellte und vom Verbringungswerkzeug 17 getragene Umverpackung 7 bündig an der Orientierungsfläche 18 (vgl. hierzu die Figuren 1 bis 5) anliegt und hierdurch ausgerichtet ist.

Der Manipulator 30 hat die in Fig. 4 noch getragenen Artikel 3 bzw. Getränkebehälter 5 in die jeweilige zugeordnete Umverpackung 7 eingesetzt und wurde in vertikaler Richtung gegenüber der Transporteinrichtung 12 angehoben. Auch werden die Umverpackungen 7 nicht mehr über die Einsetzhilfe 25 gehalten, wobei die Einsetzhilfe in vertikaler Richtung gegenüber der Transporteinrichtung 12 bewegt bzw. angehoben wurde. Der in Fig. 5 noch ausgebildete Kontakt zwischen dem Stützarm 23 und einer seitlichen Mantelfläche der auf die Transporteinrichtung 12 aufgesetzten und rechtsseitig dargestellten Umverpackung 7 wurde aufgehoben. Fig. 6 lässt darüber hinaus erkennen, dass über den Zulauf 13 bereits weitere Artikel 3 bzw. Getränkebehälter 5 bereitgestellt werden. Der Manipulator 30 kann daher zur Entgegennahme weiterer Artikel 3 bzw. Getränkebehälter 5, die für das Einsetzen in die in Fig. 6 vom Verbringungswerkzeug 17 getragenen Umverpackungen 7 vorgesehen sind, in Richtung des Zulaufs 13 bewegt werden.

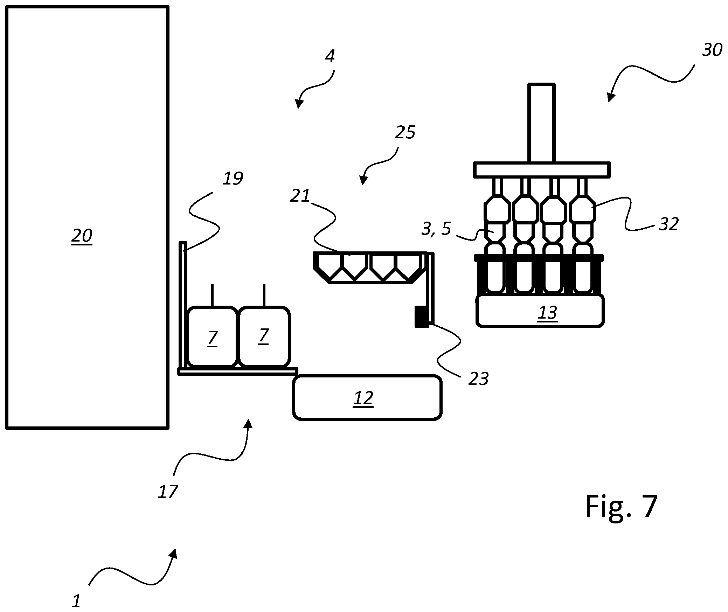

In Fig. 7 ist die Ausführungsform einer Verpackungsvorrichtung 1 aus Figuren 1 bis 6 nochmals dargestellt. Weiter wird durch eine Zusammenschau der Figuren 6 und 7 ein Schritt verdeutlicht, wie er bei diversen Ausführungsformen eines erfindungsgemäßen Verfahrens vorgesehen sein kann. Die in Fig. 6 noch dargestellten und auf die Transporteinrichtung 12 aufgesetzten Umverpackungen 7, in welche die Artikel 3 bzw. Getränkebehälter 5 eingesetzt wurden, sind in Fig. 7 nicht mehr zu erkennen und wurden via die Transporteinrichtung 12 in Richtung der Bildebene bewegt. Bspw. können die Umverpackungen 7 zusammen mit den eingesetzten Artikeln 3 bzw. Getränkebehältern 5 über die Transporteinrichtung 12 in Richtung einer Gruppierstation und/oder Palettierstation bewegt werden.

Der Manipulator 30 steht über seine Greifköpfe 32 in Fig. 7 wieder mit Artikeln 3 bzw. Getränkebehältern 5 entsprechend der Beschreibung zu Fig. 1 in Kontakt. Auf den Schritt nach Fig. 7 folgen weiterhin die bereits beschriebenen Schritte aus den Figuren 2 bis 6.

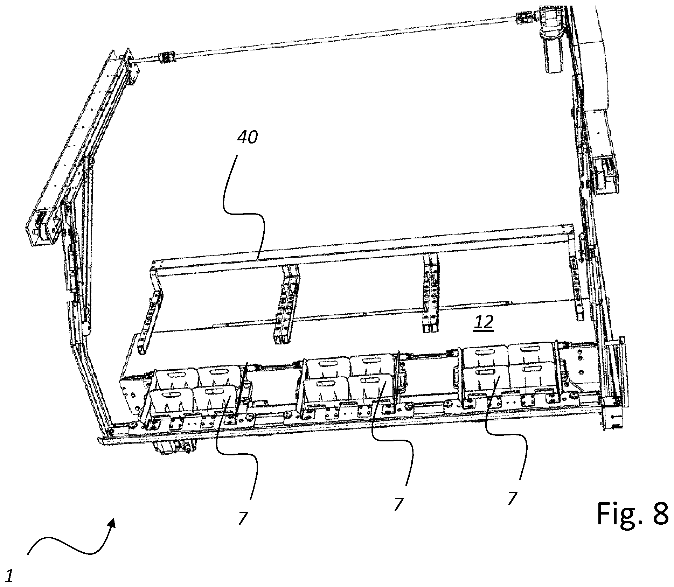

Die Figuren 8 bis 10 zeigen jeweils eine schematische Ansicht einer Ausführungsform einer erfindungsgemäßen Verpackungsvorrichtung 1. Es soll vorab erwähnt werden, dass Figuren 8 bis 10 jeweils nicht sämtliche Merkmale eines Ausführungsbeispiels einer erfindungsgemäßen Verpackungsvorrichtung 1 abbilden.

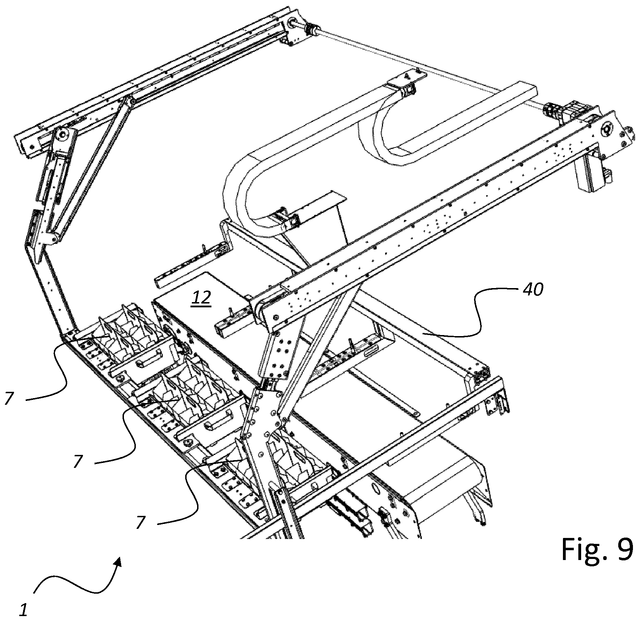

So zeigt Fig. 8 nochmals die in den Figuren 1 bis 7 bereits dargestellte Transporteinrichtung 12 sowie die bereits zu einer jeweiligen Umverpackung 7 aufgefalteten Verpackungsmittel. Ziffer 40 verweist auf eine Aufhängung, an welcher der Stützarm 23 und/oder die vorzugsweise als Rahmen ausgebildete Führung 21 (vgl. Figuren 1 bis 3 und 5 bis 7) festgesetzt werden können. Selbige Komponenten sind nochmals in Fig. 9 gezeigt, wobei Fig. 9 gut erkennen lässt, dass die Transporteinrichtung 12 ein umlaufend geführtes Transportband umfasst.

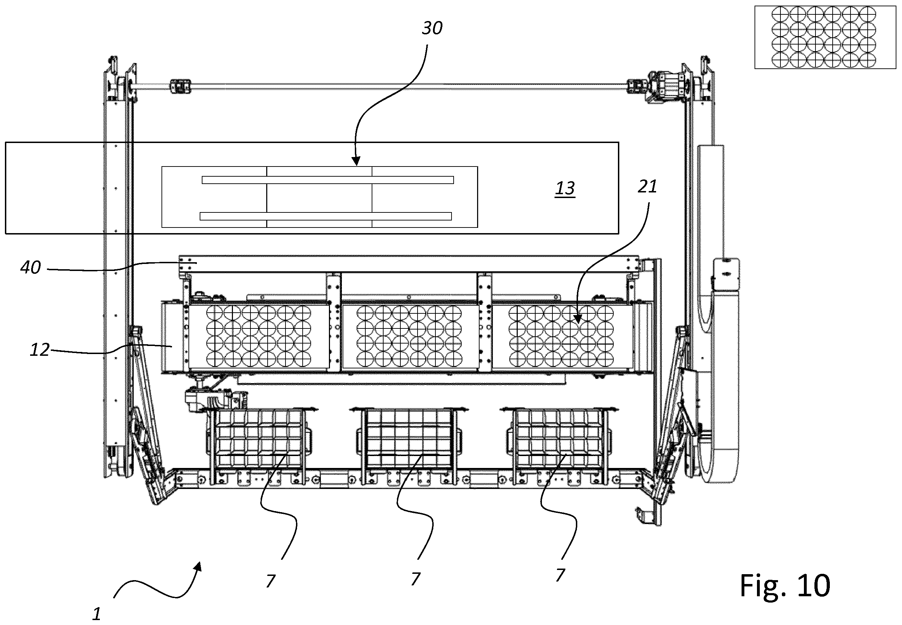

Die Fig. 10 zeigt eine schematische Draufsicht auf eine Ausführungsform einer Verpackungsvorrichtung 1. Entsprechend Figuren 8 und 9 sind auch in Fig. 10 die bereits zu einer Umverpackung 7 aufgefalteten Verpackungsmittel zu erkennen. In Fig. 10 ist die auch in Figuren 1 bis 7 gezeigte Führung 21 bzw. der Führungsrahmen an der Aufhängung 40 angeordnet. Ziffer 13 verweist weiterhin auf einen Zulauf für Artikel 3 bzw. Getränkebehälter 5, wobei der Manipulator 30 zur Entgegennahme von Artikeln 3 bzw. Getränkebehältern 5 oberhalb des Zulaufs 13 positioniert ist.

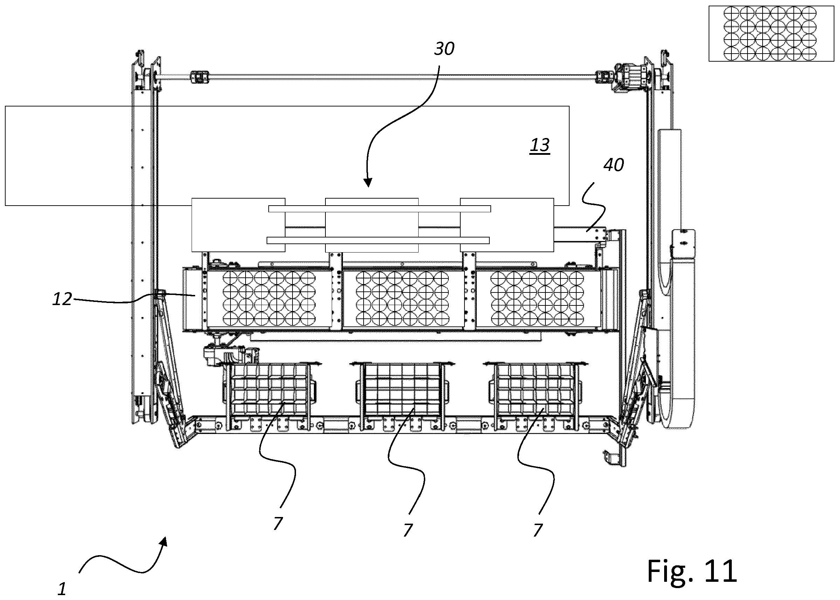

Eine Zusammenschau der Figuren 10 und 11 verdeutlicht, dass der Manipulator 30 zum Einsetzen von Artikeln 3 bzw. Getränkebehältern 5 in Richtung der Führung 21 bewegt wird und den Zulauf 13 hierbei verlässt. Das hierauf folgende Einsetzen von Artikeln 3 bzw. Getränkebehältern 5 in Umverpackungen 7 kann auf Fig. 11 folgend entsprechend der vorherigen Beschreibung zu den Figuren 4 bis 7 erfolgen.

Folgendes sei als ergänzender Hinweis zu den vorstehenden Ausführungen gegeben: Wenn auch im Zusammenhang der Figuren und deren vorstehenden Beschreibungen generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen von Teilen der Verpackungsvorrichtung 1 und/oder des Manipulators 30 oder anderer gezeichneter Elemente in irgendeiner Weise in seinem Verständnis beeinträchtigt wäre. Die Figuren ermöglichen es dem Fachmann als Leser vielmehr, anhand der konkreter erläuterten Umsetzungen des erfindungsgemäßen Verfahrens und des konkreter erläuterten Aufbaus der erfindungsgemäßen Verpackungsvorrichtung 1 ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Verpackungsvorrichtung
- 3: Artikel
- 4: Verbringungseinrichtung
- 5: Getränkebehälter
- 7: Umverpackung
- 12: Transporteinrichtung
- 13: Zulauf
- 17: Verbringungswerkzeug
- 18: Orientierungsfläche
- 19: L-förmiges Formelement
- 20: Aufrichteinrichtung
- 21: Führung
- 22: Transportwerkzeug
- 23: Stützarm
- 25: Einsetzhilfe
- 30: Manipulator
- 32: Greifkopf
- 40: Aufhängung

## Patentansprüche

1. Verpackungsvorrichtung (1) für Artikel (3), wie Getränkebehälter (5) oder dergleichen, umfassend:
- wenigstens eine Transporteinrichtung (12),
- mindestens eine Verbringungseinrichtung (4), welche ein bereits zu einer Kartonage und/oder Umverpackung (7) aufgefaltetes Verpackungsmittel entgegennehmen und an die wenigstens eine Transporteinrichtung (12) überführen kann, und
- wenigstens einen zum Einsetzen von Artikeln (3) in bereits zu einer Kartonage und/oder Umverpackung (7) aufgefaltete Verpackungsmittel ausgebildeten Manipulator (30),
wobei mittels der mindestens einen Verbringungseinrichtung (4) bereits zu einer Kartonage und/oder Umverpackung (7) aufgefaltete Verpackungsmittel ausgerichtet werden können und hierdurch in eine Orientierung überführbar sind, welche Orientierung auf das jeweilige Einsetzen von Artikeln (3) über den wenigstens einen Manipulator (30) oder mittels des wenigstens einen Manipulators (30) abgestimmt ist,
- reine Aufrichteinrichtung (1), welche zum Ausbilden von Kartonagen und/oder Umverpackungen (7) durch Auffalten von Verpackungsmitteln sowie zum Übergeben von bereits zu einer Kartonage und/oder Umverpackung (7) aufgefalteten Verpackungsmitteln an die mindestens eine Verbringungseinrichtung (4) und/oder ein als Bestandteil der mindestens einen Verbringungseinrichtung (4) ausgebildetes Verbringungswerkzeug (17) ausgebildet ist,
**dadurch gekennzeichnet, dass** die mindestens eine Verbringungseinrichtung (4) und/oder das als Bestandteil der mindestens einen Verbringungseinrichtung (4) ausgebildete Verbringungswerkzeug (17) zwischen der Transporteinrichtung (12) und der Aufrichteinrichtung (20) hin und her bewegt werden kann.

2. Verpackungsvorrichtung nach Anspruch 1, bei welcher ein als Bestandteil der Verbringungseinrichtung (4) ausgebildetes Verbringungswerkzeug (17) eine lotrecht verlaufende Orientierungsfläche (18) bereitstellt, unter bündiger Anlage an welcher lotrecht verlaufenden Orientierungsfläche (18) bereits zu einer Kartonage und/oder Umverpackung (7) aufgefaltete Verpackungsmittel ausgerichtet werden können.

3. Verpackungsvorrichtung nach Anspruch 2, umfassend wenigstens einen Stützarm (23), welcher mit dem als Bestandteil der Verbringungseinrichtung (4) ausgebildeten Verbringungswerkzeug (17) derart zusammenwirkt, dass eine durch das Verbringungswerkzeug (17) aufgenommene Umverpackung (7) durch eine Relativbewegung des Verbringungswerkzeuges (17) gegenüber dem wenigstens einen Stützarm (23) gegen die Orientierungsfläche (18) auf bündige Anlage geschoben werden kann.

4. Verpackungsvorrichtung nach Anspruch 3, bei welcher der wenigstens eine Stützarm (23) zum Abstützen einer jeweiligen durch ein aufgefaltetes Verpackungsmittel ausgebildeten Umverpackung (7) und/oder Kartonage während des Einsetzens jeweiliger Artikel (3) ausgebildet ist.

5. Verpackungsvorrichtung nach Anspruch 2 oder 3, bei welcher das als Bestandteil der mindestens einen Verbringungseinrichtung (4) ausgebildete Verbringungswerkzeug (17) ein L-förmiges Formelement (19) ist oder ein L-förmiges Formelement (19) umfasst, welches L-förmige Formelement (19) die lotrecht verlaufende Orientierungsfläche (18) bereitstellt.

6. Verpackungsvorrichtung nach Anspruch 5, umfassend:
- wenigstens ein erstes L-förmiges Formelement, welches auf ein Entgegennehmen und Ausrichten von ersten bereits zu einer Kartonage und/oder Umverpackung (7) aufgefalteten Verpackungsmitteln vorbereitet ist und
- mindestens ein zweites L-förmiges Formelement, welches auf ein Entgegennehmen und Ausrichten von zweiten bereits zu einer Kartonage und/oder Umverpackung (7) aufgefalteten Verpackungsmitteln vorbereitet ist,
wobei sich Abmessungen der ersten und der zweiten bereits zu einer Kartonage und/oder Umverpackung (7) aufgefalteten Verpackungsmittel voneinander unterscheiden und wobei wahlweise das erste L-förmige Formelement oder das zweite L-förmige Formelement von der Verbringungseinrichtung (4) zum Entgegennehmen und Ausrichten von jeweiligen bereits zu einer Kartonage und/oder Umverpackung (7) aufgefalteten Verpackungsmitteln einsetzbar ist.

7. Verpackungsvorrichtung nach einem der Ansprüche 1 bis 6, bei welcher die Verbringungseinrichtung (4) wenigstens eine Einsetzhilfe (25) umfasst, welche wenigstens eine Einsetzhilfe (25)
- zum Halten und/oder Abstützen jeweiliger bereits zu einer Kartonage und/oder Umverpackung (7) aufgefalteter Verpackungsmittel während des Einsetzens jeweiliger Artikel (3) ausgebildet ist und/oder welche wenigstens eine Einsetzhilfe (25)
- eine vorzugsweise als Rahmen ausgebildete Führung (21) für Artikel (3) zum Einsetzen von Artikeln (3) in die jeweilige durch ein bereits aufgefaltetes Verpackungsmittel ausgebildete Kartonage und/oder Umverpackung (7) bereitstellt.

8. Verpackungsvorrichtung nach Anspruch 4, bei welcher der wenigstens eine Stützarm (23) hängend und in einer Richtung nach unten weisend von der wenigstens einen Einsetzhilfe (25) getragen wird.

9. Verfahren zum Einbringen von Artikeln (3), wie Getränkebehälter (5) oder dergleichen, in zu Kartonagen und/oder Umverpackungen (7) aufgefaltete Verpackungsmittel, wobei im Rahmen des Verfahrens
- ein bereits zu einer Kartonage und/oder Umverpackung (7) aufgefaltetes Verpackungsmittel über mindestens eine Verbringungseinrichtung (4) entgegengenommen und hierauf mittels der mindestens einen Verbringungseinrichtung (4) an eine Transporteinrichtung (12) überführt wird,
- wonach mindestens ein Artikel (3) in ein jeweiliges bereits zu einer Kartonage und/oder Umverpackung (7) aufgefaltetes Verpackungsmittel eingesetzt und das bereits zu einer Kartonage und/oder Umverpackung (7) aufgefaltete und an die Transporteinrichtung (12) überführte Verpackungsmittel zusammen mit dem jeweiligen eingesetzten mindestens einen Artikel (3) über die Transporteinrichtung (12) abtransportiert wird,
- wobei das Verfahren weiterhin vorsieht, dass das bereits zu einer Kartonage und/oder Umverpackung (7) aufgefaltete Verpackungsmittel über die mindestens eine Verbringungseinrichtung (4) ausgerichtet wird und hierbei in eine Orientierung gelangt oder verbracht wird, welche auf das Einsetzen des mindestens einen Artikels (3) in das jeweilige bereits zu einer Kartonage und/oder Umverpackung (7) aufgefaltete Verpackungsmittel abgestimmt ist,
- eine Aufrichteinrichtung (20) ein Verpackungsmittel auffaltet und hierdurch aus dem Verpackungsmittel eine Kartonage und/oder Umverpackung (7) bildet, wobei die mindestens eine Verbringungseinrichtung (4) und/oder ein als Bestandteil der mindestens einen Verbringungseinrichtung (4) ausgebildetes Verbringungswerkzeug (17) zur Entgegennahme eines jeweiligen bereits zu einer Kartonage und/oder Umverpackung (7) aufgefalteten Verpackungsmittels und zur Überführung des mindestens einen entgegengenommenen und bereits zur einer Kartonage und/oder Umverpackung (7) aufgefalteten Verpackungsmittels an die Transporteinrichtung (12) ausgebildet ist, **dadurch gekennzeichnet, dass** die mindestens eine Verbringungseinrichtung (4) und/oder das als Bestandteil der mindestens einen Verbringungseinrichtung (4) ausgebildete Verbringungswerkzeug (17) zwischen der Transporteinrichtung (12) und der Aufrichteinrichtung (20) hin und her bewegt wird.

10. Verfahren nach Anspruch 9, bei welchem die mindestens eine Verbringungseinrichtung (4) und/oder ein als Bestandteil der mindestens einen Verbringungseinrichtung (4) ausgebildetes Verbringungswerkzeug (17) eine ungefähr oder annähernd lotrecht verlaufende Orientierungsfläche (18) bereitstellt, mit welcher ungefähr oder annähernd lotrecht verlaufenden Orientierungsfläche (18) ein bereits zu einer Kartonage und/oder Umverpackung (7) aufgefaltetes Verpackungsmittel in bündige Anlage gebracht wird und hieraus resultierend in die Orientierung gelangt, welche auf das Einsetzen des mindestens einen Artikels (3) in das jeweilige bereits zu einer Kartonage und/oder Umverpackung (7) aufgefaltete Verpackungsmittel abgestimmt ist.

11. Verfahren nach Anspruch 10, bei welchem
- das jeweilige bereits zu einer Kartonage und/oder Umverpackung (7) aufgefaltete Verpackungsmittel bereits während der Entgegennahme über die mindestens eine Verbringungseinrichtung (4) mit der ungefähr oder annähernd lotrecht verlaufenden Orientierungsfläche (18) in Anlage gebracht wird, und/oder bei welchem
- das bereits zu einer Kartonage und/oder Umverpackung (7) aufgefaltete Verpackungsmittel während einer Bewegung in Richtung der Transporteinrichtung (12) mit wenigstens einem im Bereich der Transporteinrichtung befindlichen Stützarm (23) in Kontakt gerät, welcher das bereits zu einer Kartonage und/oder Umverpackung (7) aufgefaltete Verpackungsmittel gegen die ungefähr oder annähernd lotrecht verlaufende Orientierungsfläche (18) in bündige Anlage bringt bzw. schiebt.

12. Verfahren nach Anspruch 11, bei welchem der im Bereich der Transporteinrichtung befindliche wenigstens eine Stützarm (23) seinen Kontakt zum jeweiligen bereits zu einer Kartonage und/oder Umverpackung (7) aufgefalteten Verpackungsmittel während des jeweiligen Einsetzens von Artikeln (3) beibehält.

13. Verfahren nach einem der Ansprüche 9 bis 12, bei welchem die Verbringungseinrichtung (4) wenigstens eine Einsetzhilfe (25) umfasst, welche wenigstens eine Einsetzhilfe (25)
- ein jeweiliges bereits zu einer Kartonage und/oder Umverpackung (7) aufgefaltetes Verpackungsmittel zeitlich während des Einsetzens jeweiliger Artikel hält und/oder stützt und/oder zumindest in einem Zeitabschnitt hält und/oder stützt, in dem Artikel eingesetzt werden, und/oder welche wenigstens eine Einsetzhilfe (25)
- eine vorzugsweise als Rahmen ausgebildete Führung (21) für Artikel (3) bereitstellt, durch welche vorzugsweise als Rahmen ausgebildete Führung (21) Artikel (3) während des Einsetzens in die jeweilige durch ein aufgefaltetes Verpackungsmittel gebildete Kartonage bzw. während des Einsetzens in die jeweilige durch ein aufgefaltetes Verpackungsmittel gebildete Umverpackung (7) hindurch bewegt werden.

14. Verfahren nach einem der Ansprüche 9 bis 13, bei welchem die wenigstens eine als Bestandteil der Verbringungseinrichtung (4) ausgebildete Einsetzhilfe (25) ein bereits zu einer Kartonage und/oder Umverpackung (7) aufgefaltetes Verpackungsmittel im Bereich der Transporteinrichtung (12) hält, woraufhin ein das bereits zu einer Kartonage und/oder Umverpackung (7) aufgefaltete Verpackungsmittel bis dahin tragendes Verbringungswerkzeug (17) der mindestens einen Verbringungseinrichtung (4) in Gegenrichtung der Transporteinrichtung (12) bewegt wird, so dass das bereits zu einer Kartonage und/oder Umverpackung (7) aufgefaltete Verpackungsmittel seinen Kontakt zum Verbringungswerkzeug (17) verliert und auf die Transporteinrichtung (12) aufsetzt.

15. Verfahren nach Anspruch 14, bei welchem die Bewegung des Verbringungswerkzeuges (17) in Gegenrichtung der Transporteinrichtung (12) vor und/oder während des Einsetzens von Artikeln (3) in das im Bereich der Transporteinrichtung (12) gehaltene und bereits zu einer Kartonage und/oder Umverpackung (7) aufgefaltete Verpackungsmittel eingeleitet wird.

## Claims

1. A packaging device (1) for articles (3), such as beverage containers (5) or the like, comprising:
- at least one transport device (12),
- at least one transfer device (4), which can receive a packaging means already unfolded into a cardboard box and/or outer packaging (7) and transfer it to the at least one transport device (12), and
- at least one manipulator (30) designed for inserting articles (3) into packaging means already unfolded into a cardboard box and/or outer packaging (7),
wherein packaging means already unfolded into a cardboard box and/or outer packaging (7) can be aligned by means of the at least one transfer device (4), thereby bringing the packaging means into an orientation, which orientation is adapted to the respective insertion of articles (3) via the at least one manipulator (30) or by means of the at least one manipulator (30),
- an erecting device (20), designed for forming cardboard boxes and/or outer packaging (7) by unfolding packaging means and for transferring packaging means already unfolded into a cardboard box and/or outer packaging (7) to the at least one transfer device (4) and/or to a transfer tool (17), which is designed as a component of the at least one transfer device (4), **characterized in that**
the at least one transfer device (4) and/or the transfer tool (17), which is designed as a component of the at least one transfer device (4), can be moved back and forth between the transport device (12) and the erecting device (20).

2. The packaging device as recited in claim 1, wherein a transfer tool (17), which is designed as a component of the at least one transfer device (4), provides a perpendicularly extending orientation surface (18), on which perpendicularly extending orientation surface (18) packaging means already unfolded into a cardboard box and/or outer packaging (7) can be aligned in flush contact.

3. The packaging device as recited in claim 2, comprising at least one support arm (23), which interacts with the transfer tool (17), which is designed as a component of the at least one transfer device (4), in such a way, that an outer packaging (7) received by the transfer tool (17) can be pushed into flush contact against the orientation surface (18) by a relative movement of the transfer tool (17) relative to the at least one support arm (23).

4. The packaging device as recited in claim 3, wherein the at least one support arm (23) is designed to support a respective outer packaging (7) and/or cardboard box formed by an unfolded packaging means during the insertion of respective articles (3).

5. The packaging device as recited in claim 2 or 3, wherein the transfer tool (17), which is designed as a component of the at least one transfer device (4), is an L-shaped form element (19) or comprises an L-shaped form element (19), which L-shaped form element (19) provides the perpendicularly extending orientation surface (18).

6. The packaging device as recited in claim 5, comprising:
- at least one first L-shaped form element, which is prepared for receiving and aligning first packaging means already unfolded into a cardboard box and/or outer packaging (7), and
- at least one second L-shaped form element, which is prepared for receiving and aligning second packaging means already unfolded into a cardboard box and/or outer packaging (7),
wherein dimensions of the first and second packaging means already unfolded into a cardboard box and/or outer packaging (7) differ from each other and wherein optionally the first L-shaped form element or the second L-shaped form element can be used by the transfer device (4) for receiving and aligning respective packaging means already unfolded into a cardboard box and/or outer packaging (7).

7. The packaging device as recited in one of the claims 1 to 6, wherein the transfer device (4) comprises at least one insertion aid (25), which at least one insertion aid (25)
- is formed for holding and/or supporting respective packaging means already unfolded into a cardboard box and/or outer packaging (7) during the insertion of the respective articles (3), and/or which at least one insertion aid (25)
- provides a guide (21), preferably in the form of a frame, for articles (3) for inserting articles (3) into the respective cardboard box and/or outer packaging (7) formed by an already unfolded packaging means.

8. The packaging device as recited in claim 4, wherein the at least one support arm (23) is supported hanging and pointing in a downward direction by the at least one insertion aid (25).

9. A method for inserting articles (3), such as beverage containers (5) or the like, into packaging means already unfolded into cardboard boxes and/or outer packaging wherein in the context of the method,
- a packaging means already unfolded into a cardboard box and/or outer packaging (7) is received via at least one transfer device (4) and is then transferred to a transport device (12) by means of the at least one transfer device (4),
- after which at least one article (3) is inserted into a respective packaging means already unfolded into a cardboard box and/or outer packaging (7), and the packaging means already unfolded into a cardboard box and/or outer packaging (7) and transferred to the transport device (12) is transported away via the transport device (12), together with the respective at least one article (3) inserted,
- wherein the method furthermore provides that the packaging means already unfolded into a cardboard box and/or outer packaging (7) is aligned via the at least one transfer device (4) and thereby attains an orientation or is being brought into an orientation, which orientation is adapted to the insertion of the at least one article (3) into the respective packaging means already unfolded into a cardboard box and/or outer packaging (7),
- wherein an erecting device (20) unfolds a packaging means and thereby forms a cardboard box and/or outer packaging (7) from the packaging means, wherein the at least one transfer device (4) and/or a transfer tool (17), which is designed as a component of the at least one transfer device (4), is designed to receive a respective packaging means already unfolded into a cardboard box and/or outer packaging (7) and to transfer the at least one packaging means already unfolded into a cardboard box and/or outer packaging (7) to the transport device (12), **characterized in that** the at least one transfer device (4) and/or the transfer tool (17), which is designed as a component of the at least one transfer device (4), is moved back and forth between the transfer device (4) and the erecting device (20).

10. The method as recited in claim 9, in which the at least one transfer device (4) and/or a transfer tool (17), which is designed as a component of the at least one transfer device (4), provides a roughly or approximately perpendicularly extending orientation surface (18), on which perpendicularly extending orientation surface (18) packaging means already unfolded into a cardboard box and/or outer packaging (7) can be aligned in flush contact and, as a result, is brought into the orientation which is adapted to the insertion of the at least one article (3) into the respective packaging means already unfolded into a cardboard box and/or outer packaging (7).

11. The method as recited in claim 10, in which
- the packaging means already unfolded into a cardboard box and/or outer packaging (7) is brought into contact with the orientation surface (18) extending roughly or approximately perpendicularly already during the receipt via the at least one transfer device (4) and/or wherein
- the packaging means already unfolded into a cardboard box and/or outer packaging (7), during a movement in the direction of the transport device (12), comes into contact with at least one support arm (23) located in the region of the transport device (12), which support arm (23) brings or pushes, as the case may be, the packaging means already unfolded into a cardboard box and/or outer packaging (7) into flush contact against the orientation surface (18) extending roughly or approximately perpendicularly.

12. The method as recited in claim 11, in which the at least one support arm (23) located in the region of the transport device retains its contact with the respective packaging means already unfolded into a cardboard box and/or outer packaging (7) during the respective insertion of articles (3).

13. The method as recited in one of the claims 9 to 12, in which the transfer device (4) comprises at least one insertion aid (25), which at least one insertion aid (25)
- holds and/or supports a respective packaging means already unfolded into a cardboard box and/or outer packaging (7) temporally during the insertion of respective articles and/or holds and/or supports it at least during a period in which articles are inserted and/or which at least one insertion aid (25)
- provides a guide (21), preferably formed as a frame, for articles (3), through which guide (21), preferably formed as a frame, articles (3) are moved during insertion into the respective cardboard box formed by an unfolded packaging means and/or during insertion into the respective outer packaging (7) formed by an unfolded packaging means.

14. The method as recited in one of the claims 9 to 13, in which the at least one insertion aid (25) designed as part of the transfer device (4) holds a packaging means already unfolded into a cardboard box and/or outer packaging (7) within the region of the transport device (12), whereupon a transfer tool (17) of the at least one transfer device (4), which transfer tool (17) carries the packaging means already unfolded into a cardboard box and/or an outer packaging (7) to that point, is moved in the opposite direction of the transport device (12), so that the packaging means already unfolded into a cardboard box and/or an outer packaging (7) loses its contact with the transfer tool (17) and is placed on the transport device (12).

15. The method as recited in claim 14, in which the movement of the transfer tool (17) in the opposite direction of the transport device (12) is started prior to and/or during the insertion of articles (3) into the packaging means held in the region of the transport device (12) and already unfolded into a cardboard box and/or outer packaging (7).

## Revendications

1. Dispositif d'emballage (1) pour des articles (3), tels que récipients à boisson (5) ou similaires, comprenant:
- au moins un dispositif de transport (12),
- au moins un dispositif de transfert (4) qui peut recevoir un moyen d'emballage déjà plié pour former un cartonnage et/ou un emballage supplémentaire (7) et peut transférer celui-ci audit au moins un dispositif de transport (12), et
- au moins un manipulateur (30) conçu pour insérer des articles (3) dans des moyens d'emballage déjà pliés pour former un cartonnage et/ou un emballage supplémentaire (7),
dans lequel des moyens d'emballage qui ont été déjà pliés pour former un cartonnage et/ou un emballage supplémentaire (7) peuvent être orientés au moyen dudit au moins un dispositif de transfert (4) et peuvent ainsi être amenés dans une orientation, laquelle orientation est adaptée à l'insertion respective d'articles (3) réalisée par ledit au moins un manipulateur (30) ou au moyen dudit au moins un manipulateur (30),
- un dispositif à dresser (20) qui est conçu pour former des cartonnages et/ou des emballages supplémentaires (7) en pliant des moyens d'emballage ainsi que pour faire passer des moyens d'emballage déjà pliés pour former un cartonnage et/ou un emballage supplémentaire (7) audit au moins un dispositif de transfert (4) et/ou à un outil de transfert (17) réalisé en tant que composant dudit au moins un dispositif de transfert (4),
**caractérisé par le fait que**
ledit au moins un dispositif de transfert (4) et/ou ledit outil de transfert (17) réalisé en tant que composant dudit au moins un dispositif de transfert (4) peut être animé d'un mouvement de va-et-vient entre le dispositif de transport (12) et le dispositif à dresser (20).

2. Dispositif d'emballage selon la revendication 1, dans lequel un outil de transfert (17) réalisé en tant que composant du dispositif de transfert (4) fournit une surface d'orientation (18) s'étendant perpendiculairement, des moyens d'emballage déjà pliés pour former un cartonnage et/ou un emballage supplémentaire (7) peuvent être orientés en étant en appui plan sur ladite surface d'orientation (18) s'étendant perpendiculairement.

3. Dispositif d'emballage selon la revendication 2, comprenant au moins un bras de support (23) qui agit de concert avec l'outil de transfert (17) réalisé en tant que composant du dispositif de transfert (4) de telle sorte qu'un emballage supplémentaire (7) reçu par l'outil de transfert (17) peut être poussé en appui plan contre ladite surface d'orientation (18) par un mouvement relatif de l'outil de transfert (17) par rapport audit au moins un bras de support (23).

4. Dispositif d'emballage selon la revendication 3, dans lequel ledit au moins un bras de support (23) est conçu pour supporter, durant l'insertion d'articles (3) respectifs, un emballage supplémentaire (7) et/ou cartonnage respectif formé par un moyen d'emballage plié.

5. Dispositif d'emballage selon la revendication 2 ou 3, dans lequel ledit outil de transfert (17) réalisé en tant que composant dudit au moins un dispositif de transfert (4) est un élément de forme (19) en L ou comprend un élément de forme (19) en L, lequel élément de forme (19) en L fournit ladite surface d'orientation (18) s'étendant perpendiculairement.

6. Dispositif d'emballage selon la revendication 5, comprenant:
- au moins un premier élément de forme en L qui est préparé pour recevoir et orienter de premiers moyens d'emballage déjà dépliés pour former un cartonnage et/ou un emballage supplémentaire (7), et
- au moins un deuxième élément de forme en L qui est préparé pour recevoir et orienter de deuxièmes moyens d'emballage déjà pliés pour former un cartonnage et/ou un emballage supplémentaire (7),
dans lequel des dimensions des premier et deuxième moyens d'emballage déjà pliés pour former un cartonnage et/ou un emballage supplémentaire (7) sont différentes les unes des autres et dans lequel, au choix, ledit premier élément de forme en L ou ledit deuxième élément de forme en L peut être utilisé par le dispositif de transfert (4) pour recevoir et orienter des moyens d'emballage respectifs déjà pliés pour former un cartonnage et/ou un emballage supplémentaire (7).

7. Dispositif d'emballage selon l'une quelconque des revendications 1 à 6, dans lequel ledit dispositif de transfert (4) comprend au moins une aide à l'insertion (25), laquelle au moins une aide à l'insertion (25)
- est conçue pour maintenir et/ou supporter, durant l'insertion d'articles (3) respectifs, des moyens d'emballage respectifs déjà pliés pour former un cartonnage et/ou un emballage supplémentaire (7), et/ou laquelle au moins une aide à l'insertion (25)
- fournit un guide (21) pour des articles (3), conçu de préférence en tant que cadre, qui est destiné à insérer des articles (3) dans le cartonnage et/ou l'emballage supplémentaire (7) respectif formé par un moyen d'emballage déjà plié.

8. Dispositif d'emballage selon la revendication 4, dans lequel ledit au moins un bras de support (23) est porté en étant suspendu et montrant vers le bas dans une direction, par ladite au moins une aide à l'insertion (25).

9. Procédé d'insertion d'articles (3), tels que récipients à boisson (5) ou similaires, dans des moyens d'emballage pliés pour former des cartonnages et/ou des emballages supplémentaires (7), dans lequel, dans le cadre du procédé,
- un moyen d'emballage déjà plié pour former un cartonnage et/ou un emballage supplémentaire (7) est reçu par au moins un dispositif de transfert (4) et est transféré ensuite au moyen dudit au moins un dispositif de transfert (4) à un dispositif de transport (12),
- ce après quoi au moins un article (3) est inséré dans un moyen d'emballage respectif déjà plié pour former un cartonnage et/ou un emballage supplémentaire (7), et le moyen d'emballage déjà plié pour former un cartonnage et/ou un emballage supplémentaire (7) et transféré au dispositif de transport (12) est évacué, conjointement avec ledit au moins un article (3) respectif inséré, par le biais dudit dispositif de transport (12),
- dans lequel le procédé prévoit en outre que le moyen d'emballage déjà plié pour former un cartonnage et/ou un emballage supplémentaire (7) est orienté par ledit au moins un dispositif de transfert (4) tout en atteignant ou en étant amené dans une orientation qui est adaptée à l'insertion dudit au moins un article (3) dans le moyen d'emballage respectif déjà plié pour former un cartonnage et/ou un emballage supplémentaire (7),
un dispositif à dresser (20) plie un moyen d'emballage et forme ainsi un cartonnage et/ou un emballage supplémentaire (7) à partir du moyen d'emballage, dans lequel ledit au moins un dispositif de transfert (4) et/ou un outil de transfert (17) réalisé en tant que composant dudit au moins un dispositif de transfert (4) est conçu pour recevoir un moyen d'emballage respectif déjà plié pour former un cartonnage et/ou un emballage supplémentaire (7) et pour transférer, audit dispositif de transport (12), ledit au moins un moyen d'emballage reçu et déjà plié pour former un cartonnage et/ou un emballage supplémentaire (7), **caractérisé par le fait que** ledit au moins un dispositif de transfert (4) et/ou l'outil de transfert (17) réalisé en tant que composant dudit au moins un dispositif de transfert (4) est animé d'un mouvement de va-et-vient entre le dispositif de transport (12) et le dispositif à dresser (20).

10. Procédé selon la revendication 9, dans lequel ledit au moins un dispositif de transfert (4) et/ou un outil de transfert (17) réalisé en tant que composant dudit au moins un dispositif de transfert (4) fournit une surface d'orientation (18) s'étendant à peu près ou approximativement perpendiculairement, c'est avec laquelle surface d'orientation (18) s'étendant à peu près ou approximativement perpendiculairement qu'un moyen d'emballage déjà plié pour former un cartonnage et/ou un emballage supplémentaire (7) est mis en appui plan et atteint par conséquent l'orientation qui est adaptée à l'insertion dudit au moins un article (3) dans le moyen d'emballage respectif déjà plié pour former un cartonnage et/ou un emballage supplémentaire (7).

11. Procédé selon la revendication 10, dans lequel
- le moyen d'emballage respectif déjà plié pour former un cartonnage et/ou un emballage supplémentaire (7) est mis en appui avec la surface d'orientation (18) s'étendant à peu près ou approximativement perpendiculairement, déjà pendant qu'il est reçu par ledit au moins un dispositif de transfert (4), et/ou dans lequel
- le moyen d'emballage déjà plié pour former un cartonnage et/ou un emballage supplémentaire (7) entre en contact avec au moins un bras de support (23) se trouvant au niveau du dispositif de transport, lors d'un mouvement en direction du dispositif de transport (12), lequel bras de support met ou bien pousse en appui plan le moyen d'emballage déjà plié pour former un cartonnage et/ou un emballage supplémentaire (7), contre la surface d'orientation (18) s'étendant à peu près ou approximativement perpendiculairement.

12. Procédé selon la revendication 11, dans lequel ledit au moins un bras de support (23) se trouvant au niveau du dispositif de transport maintient son contact avec le moyen d'emballage respectif déjà plié pour former un cartonnage et/ou un emballage supplémentaire (7), pendant l'insertion respective d'articles (3).

13. Procédé selon l'une quelconque des revendications 9 à 12, dans lequel ledit dispositif de transfert (4) comprend au moins une aide à l'insertion (25), laquelle au moins une aide à l'insertion (25)
- maintient et/ou supporte un moyen d'emballage respectif déjà plié pour former un cartonnage et/ou un emballage supplémentaire (7), durant l'insertion d'articles respectifs et/ou maintient et/ou supporte celui-ci au moins pendant une période dans laquelle des articles sont insérés, et/ou laquelle au moins une aide à l'insertion (25)
- fournit un guide (21) pour des articles (3), conçu de préférence en tant que cadre, des articles (3) sont déplacés à travers lequel guide (21) conçu de préférence en tant que cadre pendant qu'ils sont insérés dans le cartonnage respectif formé par un moyen d'emballage plié ou bien pendant qu'ils sont insérés dans l'emballage supplémentaire (7) respectif formé par un moyen d'emballage plié.

14. Procédé selon l'une quelconque des revendications 9 à 13, dans lequel ladite au moins une aide à l'insertion (25) conçue en tant que composant du dispositif de transfert (4) maintient, au niveau du dispositif de transport (12), un moyen d'emballage déjà plié pour former un cartonnage et/ou un emballage supplémentaire (7), ce après quoi un outil de transfert (17) dudit au moins un dispositif de transfert (4), qui a porté jusque-là le moyen d'emballage déjà plié pour former un cartonnage et/ou un emballage supplémentaire (7) est déplacé dans la direction opposée du dispositif de transport (12) de sorte que le moyen d'emballage déjà plié pour former un cartonnage et/ou un emballage supplémentaire (7) perd son contact avec l'outil de transfert (17) et vient se poser sur le dispositif de transport (12).

15. Procédé selon la revendication 14, dans lequel le déplacement de l'outil de transfert (17) dans la direction opposée du dispositif de transport (12) est déclenché avant et/ou pendant l'insertion d'articles (3) dans le moyen d'emballage maintenu au niveau du dispositif de transport (12) et déjà plié pour former un cartonnage et/ou un emballage supplémentaire (7).
